# EUROPÄISCHE PATENTSCHRIFT

(11) **EP 3 303 005 B1**
(45) Veröffentlichungstag und Bekanntmachung des Hinweises auf die Patenterteilung: **07.08.2019**
(21) Anmeldenummer: 16726317.7
(22) Anmeldetag: 01.06.2016
(51) Int. Cl.: B60C 5/22, B60C 23/00

(54) **DRUCKSICHERUNGS-VORRICHTUNG FÜR DRUCKLUFT GEFÜLLTE RÄDER UND VERFAHREN DAZU**
PRESSURE SAFEGUARD DEVICE FOR TIRES FILLED WITH COMPRESSED AIR, AND METHOD FOR THIS PURPOSE
DISPOSITIF DE MAINTIEN DE PRESSION POUR ROUES REMPLIES D'AIR COMPRIMÉ ET PROCÉDÉ ASSOCIÉ

(30) Priorität: 03.06.2015 CH 7922015
(43) Veröffentlichungstag der Anmeldung: 11.04.2018
(73) Patentinhaber: Generation Concept Stiftung, 9494 Schaan (LI)
(72) Erfinder: BERGER, Johann, 9500 Wil (CH)
(74) Vertreter: Kaminski Harmann Patentanwälte AG (Schweiz)
(86) Internationale Anmeldenummer: PCT/EP2016/062384
(87) Internationale Veröffentlichungsnummer: WO 2016/193310

(56) Entgegenhaltungen:
- EP-A1- 2 226 203
- WO-A1-00/53435
- CN-U- 202 337 184
- DE-U1-202010 013 162
- JP-U- S50 150 902
- JP-U- S50 152 302
- JP-U- S61 122 102

## Beschreibung

Die Erfindung bezieht sich auf eine Drucksicherungs-Vorrichtungen für Druckgas gefüllte Räder nach dem Oberbegriff des Anspruches 1 und ein Verfahren zum Sicherstellen von vorgegebenen Druckwerten im Innern von Rädern nach dem Oberbegriff des Anspruchs 13.

Mit Druckgas bzw. Druckluft gefüllte Räder werden an Land- und Luftfahrzeugen eingesetzt und umfassen an einer Felge zumindest einen Reifen, der mit Druckluft bzw. Druckgas gefüllt ist. Es gibt sowohl Reifen ohne als auch solche mit Schläuchen. Zur Herstellung der Schläuche werden genügend elastische und luftdichte Gummi-Materialien aus syntehtischem oder natürlichem Kautschuk, beispielsweise Butylkautschuk oder Latex verwendet. Butylschläuche sind etwas weniger hitzeempfindlich als Naturkautschuk-Schläuche, dafür aber günstiger in der Herstellung. Um das Verkleben der Schlauchinnenwände und der Schläuche mit dem Reifen oder der Felge zu verhindern, können sie innen und aussen mit Talkum oder einem anderen haftungsreduzierenden Mittel versehen werden.

Nach dem Eindringen von Fremdkörpern, wie Nägeln, Schrauben, Steinen, Glas oder auch bei Beschädigungen der Reifen aufgrund von angefahrenen Hindernissen kann Druckluft bzw. Druckgas entweichen, was zu einem unerwünschten Druckabbau im Reifen führt. Wenn während der Fahrt der Druck schnell und/oder unter einen minimal nötigen Wert abfällt, besteht eine hohe Unfallgefahr und es muss am Ort, wo der Schaden auftritt, der Reifen gewechselt werden. Dies ist in der Nacht, bei extremer Witterung und/oder an abgelegenen Strassenabschnitten nicht nur unangenehm, sondern kann auch gefährlich sein, insbesondere für Frauen. Ein Reifenwechsel kann auch zum Verpassen von wichtigen Terminen führen.

Ein gegebenenfalls eingesetztes Ersatzrad kann nicht langfristig als Ersatz für einen defekten Reifen verwendet werden. Zur Schadenreduktion wurden Runflat Reifen mit verstärkten Flanken entwickelt, die nach einem Schadensfall ein Weiterfahren mit reduzierter Geschwindigkeit zu einer Servicestelle zulassen. Für minimale Beschädigungen von schlauchlosen Reifen wurden Reparatur-Sprays entwickelt, deren Dichtungsmittel ein kleines Loch verschliessen kann. Aufschäumende und aushärtende Produkte haben den Nachteil, dass sie sich zu fest mit der Felge und dem Reifen verbinden, so dass anschliessend gegebenenfalls der Reifen und die Felge ersetzt werden müssen.

Bei den bekannten Lösungen, welche bei einem Reifenschaden kurzzeitig ein Weiterfahren ermöglichen, müssen meist die ganzen Reifen ersetzt werden, was mit einem hohen Materialaufwand verbunden ist. Kleinere Schäden an einem Reifen können mit Pflaster und Pfropfen oder einem Kombireparaturkörper sowie einer Fulkanisierbehandlung behoben werden, so dass der Reifen wieder verwendet werden kann. Weil die dabei entstehenden Kosten im Verhältnis zu einem neuen Reifen relativ hoch sind, wird häufig auch bei kleineren Schäden der gesamte Reifen ersetzt. Für ein optimales Fahrverhalten ist es sogar nötig auch den zweiten Reifen an der gleichen Achse auszuwechseln.

DE 26 31 646 beschreibt Sicherheitsreifen mit mindestens einer inneren Trennwand, die den Innenraum des Reifens in mindestens zwei unabhängige abgeschlossenen Abteilungen unterteilt. Entweder schliesst die mindestens eine Trennwand dicht an der Felge an oder in jeder abgeschlossenen Abteilung des Reifens ist ein Schlauch angeordnet. Wenn nun der Reifen und gegebenenfalls ein Schlauch an einer Stelle von einem Nagel durchstossen wird, so verliert lediglich die betroffene Abteilung des Reifens die darin eingefüllte Druckluft. Mindestens eine andere Abteilung bleibt aber mit Druckluft gefüllt und hält den Reifen in einem fahrbaren Zustand. Aufgrund des teilweisen Druckabbaus ist aber nur eine Weiterfahrt mit reduzierter Geschwindigkeit und nur über eine eingeschränkte Distanz möglich. Weitere Nachteile dieser Lösung bestehen darin, dass für die separaten Ventile aller Abteilungen eine Spezialfelge benötigt wird und dass die inneren Trennwände des Reifens bei der Reifenherstellung mit grossem Aufwand und bei der Montage des Reifens auf der Felge mit Schwierigkeiten verbunden sind.

DE 199 64 211 A1 und WO 00/53435 A1 beschreiben ebenfalls aufwändig hergestellte Reifen mit Kammern. Diese Reifen können nur an Spezialfelgen montiert werden, welche auch die Anordnung einer Vielzahl von Ventilen ermöglicht. In Schnittebenen, welche die Radachse umfassen, erstreckt sich die Kontaktlinie zwischen der Spezialfelge und dem Reifen im Wesentlichen entlang einer Geraden. Um einen Druckabfall zu erkennen und zu kompensieren beschreibt DE 199 64 211 A1 ein Luftdruck-Überwachungssystem mit Reifendrucksensoren, die über Schleifkontakte in den Naben mit einer Steuerung des Fahrzeugs und mit einem Reifenaufpumpsystem verbunden sind. Nicht nur die Form des Reifens sondern auch das beschriebene Gesamtsystem ist sehr komplex aufgebaut und schliesst einen Einsatz mit Standardfelgen aus.

WO 2009/050740 A1 beschreibt einen Reifen mit mehreren voneinander getrennten Kammern, die sich kreisförmig um die Reifenachse erstrecken, wobei sich eine radial innere Kammer bei der Felge befindet und weitere Kammern zwischen der radial inneren Kammer und der Lauffläche des Reifens angeordnet sind. Die Herstellung des Kammersystems im Reifen ist sehr kompliziert und bei einem Schaden muss der ganze Reifen ersetzt werden.

JP S61 122102 U beschreibt einen Reifen an dem bei der Lauffläche Luftkammern ausgebildet sind. Von einem Speiseanschluss bei der Felge führt eine Leitung zu einer Sammelleitung, die mit allen Luftkammern verbunden ist. Bei einer defekten Luftkammer gelangt über die Sammelleitung auch die Luft der anderen Luftkammern in die defekte Luftkammer und tritt durch die defekte Stelle aus.

JP S50 152302 U zeigt einen sich um eine zentrale Achse erstreckenden geschlossenen Schlauch mit drei Trennwänden, die sich in Achsrichtung erstrecken und vier in radialer Richtung aufeinanderfolgende Kammern bilden. Die Kammern sind mit Leitungen an einem Speiseanschluss angeschlossen. Wenn die radial äusserste Kammer aufgrund eines eintretenden Nagels die Druckluft verliert, kann auch die sich dabei radial nach aussen bewegende Trennwand vom Nagel aufgestochen werden, so dass auch: die Luft der radial inneren Kammer austritt.

CN 202 337 184 U zeigt viele Schlauchkammern, die entlang eines Kreisumfangs nebeneinandern angeordnet sind und den Kreisumfang je ringförmig umschließen.

JPS50150902U zeigt einen Reifen, in dem zwei kreisförmig geschlossene Schläuche nebeneinander um die Reifenachse verlaufend angeordnet sind und der Reifen auf einer Felge montiert ist.

DE 10 2010 039 854 A1 beschreibt ein Rad, bei dem eine Hochdruckkammer auf der Felge im Innern des Reifens angeordnet ist. Bei minimalen Leckage kann der Reifendruck durch Zuführen von Luft aus der Hochdruckkammer konstant gehalten werden. Bei einem Reifenschaden entweicht etwas verzögert auch alle Luft aus der Hochdrucckammer. Die Montage der Hochdruckkammer auf der Felge ist aufwändig und bei einem Reifenschaden muss der Reifen ersetzt werden. Die Hochdruckkammer erschwert zudem die Montage des Reifens.

DE 43 44 524 A1 beschreibt ein Rad mit einer in der Felge angeordneten Hochdrucckammer und einem im Innern des Reifens angeordneten von der Hochdruckkammer aufblasbaren Notlaufreifen. Bei einem Reifenschaden, kann es sein, dass das Element, welches den Schaden verursacht hat, noch im Reifen steckt. Wenn der Notlaufreifen an die Innenseite des Reifens aufgeblasen wird, so kann auch dieser vom Schaden verursachenden Element beschädigt werden. Die für die beschriebene Lösung nötige Felge ist sehr aufwändig aufgebaut.

Die erfindungsgemässe Aufgabe besteht nun darin eine einfache Lösung zu finden, die mit gängigen Felgen und Reifen kompatibel ist und bei Reifenbeschädigungen, die zum Austreten von Druckluft oder Druckgas führen, einen vorgegebenen Minimaldruck im Reifeninnern sicherstellt. Insbesondere soll auch nach einem aufgetretenen Reifenschaden wieder der gewünschte Normaldruck im gesamten Reifen aufgebaut werden können.

Die Aufgabe wird durch eine Drucksicherungs-Vorrichtung mit den Merkmalen des Anspruches 1, bzw. durch ein Verfahren mit den Merkmalen des Anspruchs 13 gelöst. Die abhängigen Ansprüche beschreiben alternative bzw. vorteilhafte Ausführungsvarianten, welche weitere Aufgaben lösen.

Die erfindungsgemässe Drucksicherungs-Vorrichtung für Druckgas gefüllte Räder, bei denen in einem Reifen mindestens zwei kreisförmig geschlossene Schläuche nebeneinander um die Reifenachse verlaufend angeordnet werden und der Reifen auf einer Felge montierbar ist, umfasst mindestens zwei, vorzugsweise aber mindestens vier, insbesondere mindestens fünf, Schläuche, einen gemeinsamen Speiseanschluss und von jedem Schlauch eine Speiseleitung zum gemeinsamen Speiseanschluss, wobei bei jeder Speiseleitung zwischen dem Schlauch und dem gemeinsamen Speiseanschluss eine anschliessbare und lösbare Verbindung ausgebildet ist. Vorzugsweise sind die Schläuche über eine vom Reifen getrennte Verbindungseinrichtung zu einem Stapel aus entlang ihres Umfangs mit Seitenbereichen je direkt aneinander anschliessenden Schläuchen lösbar verbunden.

Die erfindungsgemässe Lösung kann auf Standard-Felgen und in Standard-Reifen eingesetzt werden, wobei der gemeinsame Speiseanschluss an der an der Felge ausgebildeten Durchführöffnung für ein Ventil angeordnet wird. Die in einem Reifen eingesetzten mindestens zwei kreisförmig geschlossenen Schläuche können voneinander getrennt werden. Das Ersetzen eines einzelnen defekten Schlauches wird durch die anschliessbaren und lösbaren Verbindungen an den Speiseleitungen zwischen dem jeweiligen Schlauch und dem gemeinsamen Speiseanschluss ermöglicht. Die unbeschädigten Schläuche und der Reifen können weiter verwendet werden.

Die bevorzugten Ausführungsformen umfassen eine vom Reifen getrennte Verbindungseinrichtung, mit der Schläuche zu einem Stapel lösbar verbunden werden. Solche Schlauch-Stapel mit Speiseleitungen zum gemeinsamen Speiseanschluss an einer Felge können einfach in einen Reifen eingesetzt und mit dem Reifen auf der Felge montiert werden.

Bei einem Reifenschaden wird in den überwiegenden Fällen lediglich ein einziger Schlauch beschädigt und somit verliert der Reifen nur den von diesem Schlauch ursprünglich bereitgestellten Druckanteil. Wenn im Reifen mindestens vier oder mindestens fünf Schläuche angeordnet sind, so wird das Laufverhalten der Reifens beim Verlust des Druckanteils eines Schlauches nur wenig verändert und die Unfallgefahr ist auch bei einem Reifenschaden sehr klein. Das Element, das den Schaden ausgelöst hat, verbleibt im Bereich des beschädigten Schlauches oder fällt vom Reifen ab. Die anderen Schläuche bleiben meist auch dann unbeschädigt, wenn das Element im Reifen festsitzt.

Bei einem Reifenschaden mit einem defekten Schlauch können die anderen Schläuche, gegebenenfalls nach dem Entfernen des Elements, das den Schaden ausgelöst hat, soweit aufgepumpt werden, dass im Reifen wieder der gewünschte Reifendruck aufgebaut ist.

Mit dem beanspruchten Verfahren ist eine Wiederherstellung des gewünschten Reifendruckes im Wesentlichen beim Ort möglich, wo der Reifenschaden und die damit verbundene kleine Druckreduktion aufgetreten ist.

Bei der Verwendung der Drucksicherungs-Vorrichtung ergeben sich weitere Vorteile dadurch, dass die Anforderungen an den Reifen reduziert werden. Weil die Druckluft in dichten Schläuchen aufgenommen ist, kann beim Reifen auf eine luftdichte Innenschicht verzichtet werden. Der Stapel aus in Richtung der Reifenachse entlang ihres Umfangs mit Seitenbereichen je direkt aneinander anschliessenden Schläuchen umfasst im druckbeaufschlagten Zustand radial verlaufende Schlauchwände, welche zwischen der Felge und dem Laufstreifen des Reifens eine Stützfunktion übernehmen. Dadurch werden beim Reifen die Anforderungen an Stahlcord-Gürtellagen und/oder an die Textilcordeinlagen reduziert, ohne dadurch Nachteile bezüglich Formstabilität und/oder Rollwiderstand in Kauf nehmen zu müssen. Auch die für die Fahrstabilität und das Lenkverhalten am Reifen ausgebildete Wulstverstärkung und/oder das Kernprofil können reduziert werden, weil ein daran anschliessender Schlauch deren Funktion zumindest teilweise übernehmen kann. Um die weiteren Vorteile in möglichst grossem Umfang zu erzielen, werden die Schläuche in bevorzugten Ausführungsformen gegebenenfalls mit erhöhter Wandstärke und/oder mit Zusatzlagen ausgestattet.

Gemäss einer bevorzugten Ausführungsform umfasst die Drucksicherungs-Vorrichtung einen Reifen und die Umfangslängen der Schläuche sind so an diesen Reifen angepasst, dass sie nach dem Anordnen im Reifen und dem Aufblasen bis zu einem ersten Füllgrad mit ihren der Reifenachse zugewandten kleinsten Umfangslinien bei einem Radius um die Reifenachse verlaufen, der um einen vorgegebenen Betrag grösser ist als der Innenradius der Reifen-Randlinien mit dem kleinsten Umfang des Reifens. Der im Reifen mit den Schläuchen beim kleinsten Umfang des Reifens sichergestellte Freiraum ermöglicht eine problemlose Montage auf der Felge.

Zuerst werden die Schläuche über die Speiseleitungen am gemeinsamen Speiseanschluss angeschlossen, welcher vorzugsweise an einer Durchführöffnung der Felge angeordnet ist. Anschliessend werden die Schläuche über den gemeinsamen Speiseanschluss bis zu einem ersten Füllgrad aufgeblasen, so dass die Schläuche im Reifen gehalten sind und den gewünschten Freiraum bereitstellen. In diesem Zustand ist die Montage des Reifens auf der Felge ohne Probleme durchführbar, weil der Freiraum für den radial nach aussen vorstehenden Felgenrand genügend gross ist.

Wenn der Reifen mit den Schläuchen auf der Felge montiert ist, können die Schläuche mit Druckgas gefüllt werden, bis im Reifen der gewünschte Reifendruck aufgebaut ist. Wenn der Reifen dicht an die Felge anschliesst, kann die Luft zwischen den Schläuchen und der Felge nicht entweichen. Darum ist es vorteilhaft, wenn zumindest die Durchführöffnung durch die Felge oder der eingesetzte gemeinsame Speiseanschlusses noch eine Entlüftungsverbindung vom Innenraum zwischen der Felge und dem Reifen zur Umgebung bereitstellt. Es versteht sich von selbst, dass auch zusätzliche Entlüftungsöffnungen durch die Felge ausgebildet sein können, damit die Schläuche so aufgeblasen werden, dass im Wesentlichen keine Restluft zwischen den Schläuchen und der Felge bzw. dem Reifen verbleibt.

Damit sich die Schläuche beim Aufblasen optimal aneinander und an die Innenseite des Reifens sowie der Felge anlegen, werden gegebenenfalls zumindest Teile der Aussenflächen der Schläuche mit einer Beschichtung oder dem Aufbringen eines Pulvers gleitend gemacht.

Im vollständig aufgeblasenen Zustand erstrecken sich aneinander anliegende Schlauchwände benachbarter Schläuche im Wesentlichen radial von der Felge zur von der Reifenlauffläche abgewandten Innenseite des Reifens. Aufgrund des Drucks in den Schläuchen und gegebenenfalls auch aufgrund von an den Schläuchen angeordneten Verbindungsmitteln zum Zusammenhalten der benachbarten Schläuche sind die radial verlaufenden Schlauchwände versteift und könnten durch die beim Rollen der Räder periodisch auftretende Komprimierung und Dekomprimierung mechanisch stark belastet werden.

Gemäss einer bevorzugten Ausführungsform werden ringförmige Dämpfungselemente zwischen den aneinander anliegenden Schlauchwänden, vorzugsweise in der Nähe der Innenfläche des Reifens, angeordnet. Bei einem solchen Dämpfungselement weichen beide Schlauchwände etwas von der radialen Ausrichtung ab. Die radial ausgerichteten Abschnitten drücken in Komprimierphasen auf das Dämpfungselement, welches die Komprimierung aufnehmen kann. Dazu ist das Dämpfungselement elastisch ausgebildet, gegebenenfalls aus Moosgummi oder aus einem genügend elastischen bzw. dämpfungsfähigen Kunststoff.

Ringförmige Dämpfungselemente zwischen benachbarten Schläuchen übernehmen in speziellen Ausführungsformen nebst der Dämpfungsfunktion auch eine Verbindungsunktion. Dazu umfassen sie zumindest Bereiche mit Klettelementen, formschlüssigen Verbindungselementen oder lösbarem Kleber.

Die sich radial von der Felge zur Innenseite des Reifens bei der Reifenlauffläche erstreckenden Schlauchwände benachbarter Schläuche und die dazwischen liegenden Schlauchbereiche führen über die Reifenbreite zu leicht unterschiedlichen Druckkräften. Bei exakten Konturbestimmungen über die Reifenbreite, können bei den sich radial zur Reifenlauffläche erstreckenden Schlauchwänden, also bei den Kontaktbereichen zwischen Schläuchen, minimal kleinere radiale Ausdehnungen der ringförmigen Teilflächen der Reifenlauffläche gemessen werden als in Bereichen dazwischen. Die in einer Schnittebene durch die Reifenachse verlaufende Aussenkontur zeigt minimale Abweichungen von der gewünschten Kontur. Die Abweichungen liegen beispielsweise lediglich im Bereich von 0.02 bis 0.2 mm und hängen dabei auch von den jeweiligen Reifen, insbesondere deren Stahlcord-Gürtellagen und/oder Textilcordeinlagen und/oder von den Gummi-Querschnittverläufen und/oder von der Gummimischung ab.

Gemäss einer bevorzugten Ausführungsform werden Zwischen-Schläuche in Bereichen bei den aneinander anliegenden Schlauchwänden direkt anschliessend an die Innenfläche des Reifens angeordnet. Diese Zwischen-Schläuche haben im Druck beaufschlagten Zustand des Reifens in Ebenen durch die Reifenachse kleinere Querschnittflächen als die anderen Schläuche und sie reduzieren die radiale Ausdehnung der radial ausgerichteten aneinander anliegenden Abschnitte der jeweils beidseits angeordneten Schläuche. Diese Zwischen-Schläuche führen in einer Richtung parallel zur Reifenachse zu einer Vergleichmässigung des an der Innenseite der Reifenlauffläche anliegenden Druckes und damit auch zu einer Vergleichmässigung der Kontur der Reifenlauffläche. Dies wiederum gewährleistet eine bessere Kraftübertragung zwischen dem Reifen und der Fahrbahn.

Entsprechend kann der beim Reifen für eine gewünschte kontinuierliche Kontur der Reifenlauffläche betriebene Aufwand reduziert werden. Insbesondere können Reifen mit einfacheren Stahl- und/oder Textileinlagen und/oder mit veränderter Laufflächengeometrie eingesetzt werden, ohne Verschlechterung des Konturverlaufs. Zudem reduzieren die Zwischen-Schläuche in Komprimierphasen die Kräfte, welche auf die sich radial zur Reifenlauffläche erstreckenden Schlauchwänden wirken.

Jeder Zwischen-Schlauch ist über eine Speiseleitung mit einem gemeinsamen Speiseanschluss verbunden. Gegebenenfalls führt die Speiseleitung vom Zwischen-Schlauch bis zum gemeinsamen Speiseanschluss und ist damit über eine lösbare Verbindung verbunden. Bei einer bevorzugten Ausführungsform verläuft die Verbindung des Zwischen-Schlauches zum gemeinsamen Speiseanschluss über einen benachbarten Schlauch und vom benachbarten Schlauch über dessen Speiseleitung zum gemeinsamen Speiseanschluss, wobei auf diesem Verbindungsweg mindestens eine anschliessbare und lösbare Verbindung ausgebildet ist, vorzugsweise beim gemeinsamen Speiseanschluss.

Damit bei einem beschädigten Zwischen-Schlauch nicht auch noch unerwünscht viel Druckgas aus dem damit verbundenen benachbarten Schlauch entweichen kann, wird erfindungsgemäß zwischen diesen beiden Schläuchen eine Differenzdruck-Schliesseinrichtung eingesetzt. Diese macht die Verbindung zwischen dem Zwischen-Schlauch und dem damit verbundenen Schlauch mittels des Druckes mindestens eines intakten Schlauches verschliessbar.

Bei einer weiteren bevorzugten Ausführungsform ist der gemeinsame Speiseanschluss an einer Durchführöffnung der Felge angeordnet. Auf der dem Reifen abgewandten radial achsnahen Seite der Felge umfasst der gemeinsame Speiseanschluss eine Speiseöffnung und auf der radial von der Radachse abgewandten Seite für jede Speiseleitung einen Verschlussbereich, wobei diese Verschlussbereiche vorzugsweise vorgespannt alle Verbindungen von der Speiseöffnung in die Speiseleitungen einzeln verschliessen. Dadurch wird sichergestellt, dass bei einem lecken Schlauch die anderen Schläuche nicht über ihre Speiseleitungen Druckgas durch den defekten Schlauch an die Umgebung abgeben.

Gemäss einer bevorzugten Ausführungsform des gemeinsame Speiseanschlusses ist dessen Speiseöffnung analog zu einem Standard-Ventil mit einem Rückschlagventil versehen, das mittels Einstossen eines zentralen Stifts geöffnet werden kann. Wenn nun die Bewegung dieses Stifts auch die Verschlussbereiche von den Verbindungen zu den Speiseleitungen weg bewegt, so kann damit Druckgas aus den Schläuchen abgelassen, oder bei einem höheren Druck auf der Seite der Speiseöffnung Druckgas in die Schläuche eingefüllt werden. Es versteht sich von selbst, dass gegebenenfalls nur die vorgespannten Verschlussbereiche vorgesehen sind, ohne zusätzliches Standard-Ventil.

In einer bevorzugten Ausführungsform nehmen die Abstände der Verschlussbereiche entlang der im Wesentlichen radial verlaufenden Längsachse des Speiseanschlusses zu bzw. ab. Die Schnittlinien der Verschlussbereiche mit Normalebenen zur Längsachse können dabei gerade oder gekrümmt ausgebildet sein. Vorzug s-weise werden die Verschlussbereiche von Teilflächen eines verschiebbaren Ventilkörpers gebildet, wobei der Ventilkörper in einem entsprechend ausgebildeten Gehäuse mit Öffnungen zu den Speiseleitungen angeordnet ist. Die schliessende Vorspannung zwischen Gehäuse und Ventilkörper wird vorzugsweise durch mindestens ein Federelement erzielt.

Die Öffnungen und die daran anschliessenden Speiseleitungen sind über lösbare Verbindungen dicht verbindbar. Insbesondere sind an den Öffnungen Ringnuten ausgebildet und die Endbereiche der Speiseleitungen umfassen entsprechende Ringwülste zum Eingreifen in die Ringnuten. Weil die innere Querschnittfläche der Speiseleitungen klein gewählt werden kann, sind die von Eingriffs-Verbindungen aufzunehmenden Kräfte klein.

Die Wandstärke bzw. Formstabilität der Speiseleitungen wird vorzugsweise so hoch ausgebildet, dass sie auch offen bleiben, wenn sie von aussen mit gängigen Reifendrücken belastet sind. Diese Belastbarkeit ist für das Entleeren der Schläuche nötig, weil ja die Speiseleitungen im Innern des Reifens von den Schläuchen zum gemeinsamen Speiseanschluss verlaufen und somit an ihrer Aussenseite mit dem Reifendruck belastet sind.

Damit beim Nachfüllen von Druckgas in mehrere an einem gemeinsamen Speiseanschluss angeschlossenen Speiseleitungen, von denen eine zu einem defekten Schlauch führt, das zugeführte Druckgas nicht durch den defekten Schlauch in die Umgebung entweichen kann, wird bei einer weiteren bevorzugten Ausführungsform für jeden Schlauch eine Differenzdruck-Schliesseinrichtung eingesetzt. Diese macht die Verbindung durch den gemeinsamen Speiseanschluss zum defekten Schlauch mittels des Drucks mindestens eines intakten Schlauches verschliessbar.

In einer besonders vorteilhaften Ausführungsform umfasst die Differenzdruck-Schliesseinrichtung bei jeder Verbindung eines Schlauches zu dessen Speiseleitung ein Schliesselement zum Verschliessen der Verbindung von der Speiseleitung in den Schlauch. Das Schliesselement wird von einer Offenstelleinrichtung mit einer vorgegebenen Offenstellkraft offengehalten, wobei bei mindestens zwei Schläuchen, die in einem Reifen angeordnet und ursprünglich mit Druckgas gefüllt sind, nach dem Entstehen eines Lecks in einem Schlauch, der mit Druckgas gefüllte mindestens eine verbleibende ganze Schlauch den Schlauch mit dem Leck flachdrückt und dabei dessen Schliesselement entgegen der Offenstellkraft in eine Schliessposition bewegt. Dadurch wird verhindert dass beim Nachfüllen von Druckgas durch den gemeinsamen Speiseanschluss eine unerwünscht hohe Menge des zugeführten Druckgases durch den Schlauch mit dem Leck entweichen kann. Der überwiegende Anteil des zugeführten Druckgases gelangt in den mindestens einen anderen Schlauch.

Gegebenenfalls wird die Differenzdruck-Schliesseinrichtung analog im gemeinsamen Speiseanschluss ausgebildet, wobei dann beispielsweise Membranen von den effektiven Drücken in den Schläuchen so betätigbar sind, dass der Durchgang zu einem defekten Schlauch von entgegen einer Offenstelleinrichtung zusammengepressten Membranen verschlossen wird.

Die Verbindungseinrichtung, welche die Schläuche als Schlauchpacket zusammenhält, umfasst mindestens ein Verbindungsmittel, das an mindestens einem Schlauch angeordnet ist oder das die Schläuche zumindest teilweise umschliesst.

Ein Verbindungsmittel, das an mindestens einem Schlauch angeordnet ist, umfasst vorzugsweise auf mindestens einer Seite des Schlauches angeordnete Verbindungselemente, welche in Umfangsrichtung des mindestens einen Schlauches zumindest an zwei im Wesentlichen gleichmässig über den Umfang verteilten Stellen angeordnet sind, wobei diese Verbindungselemente vorzugsweise von Elementen für Klett-, Einrast- oder Formschlussverbindungen oder gegebenenfalls von Bereichen mit einem eine lösbare Verbindung erzielenden Klebstoff gebildet sind. Bei vorteilhaften Klettverbindungen wird jeder Schlauch in Richtung der Reifenachse auf einer Seite erste Klettelemente und auf der anderen Seite zweite Klettelemente aufweisen, wobei die ersten und die zweiten Klettelemente lösbar mit einander verbindbar sind.

Ein Verbindungsmittel, das die Schläuche zumindest teilweise umschliesst, wird in einer bevorzugten Ausführungsform von einem Flachmaterial gebildet, das zumindest in einem Umfangsbereich der Schläuche hüllenförmig um diese angeordnet werden kann. Damit dieses Flachmaterial einfach montierbar ist und beim Fahren die Schläuche nicht störend beansprucht, wird vorzugsweise ein textiles Flachmaterial verwendet, das sich gut um den Schlauchstapel in eine geschlossenen Form bringen lässt, wobei bei einem Kontakt- oder Überlappungsbereich eine Verbindungsanordnung, vorzugsweise mit einer lösbaren Klett-, Formschluss oder Haftverbindung vorgesehen ist.

Wenn das Flachmaterial nur beim Montieren die Schläuche in der Form eines Stapels zusammenhalten muss, kann es äusserst minimal, beispielsweise als Maschenware ausgebildet werden. Wenn das Flachmaterial auch noch zwischen dem Reifen und den Schläuchen eine Verstärkung bildet, so wird es insbesondere so ausgebildet, dass bei einem beschädigten Reifen, kein Schlauchbereich durch die beschädigte Stelle austreten kann.

Beim erfindungsgemässen Verfahren zum Sicherstellen eines vorgegebenen Druckwertes einer Drucksicherungs-Vorrichtung wird nach einer Druckreduktion aufgrund eines defekten Schlauches eine Druckgasquelle, vorzugsweise eine Druchgasflasche, an den gemeinsamen Speiseanschluss angeschlossen und in die dichten Schläuche im Wesentlichen das aus dem defekten Schlauch entwichene Gasvolumen eingefüllt bis zum Erreichen eines vorgegebenen Druckwertes im Reifen.

Das Verfahren bei dem eine Druckgasflasche an den gemeinsamen Speiseanschluss angeschlossen wird, hat den Vorteil, dass die Grösse und Befüllung dieser Flasche so bemessen werden kann, dass im Wesentlichen das aus einem Schlauch entwichene Druckgas-Volumen ersetzt wird. Dabei muss die Person, welche die Nachfüllung durchführt, nicht wissen, bis zu welchem Druck der Reifen befüllt wird. Eine aktive Unterbrechung des Füllvorgangs beim richtigen Druck ist nicht nötig. Es ist vorteilhaft, wenn an der Druckgasflasche eine Endanzeige vorgesehen ist, aus der hervorgeht, ob am Ende der Nachfüllung im Reifen ein genügender Druck aufgebaut wurde. Wenn die Endanzeige einen ungenügenden Druck anzeigt, so muss davon ausgegangen werden, dass mindestens ein weiterer Schlauch defekt ist und eine Nachfüllung mit einer weiteren Druckgasflasche nötig ist.

Wenn die Räder eines Fahrzeugs mit erfindungsgemässen Drucksicherungs-Vorrichtungen ausgerüstet sind, so genügt nach einem Druckabfall in einem Reifen in den überwiegenden Fällen das Mitführen von mindestens einer Druckgasflasche, um ein im Wesentlichen uneingeschränktes Weiterfahren zu gewährleisten. Eine Druckgasflasche ermöglicht ein einfaches und schnelles Nachfüllen der unbeschädigten Schläuche ohne besondere Fachkenntnisse. Beim schnellen Nachfüllen ist die nachfüllende Person nur sehr kurz ausserhalb des Fahrzeugs beschäftigt, so dass die Gefahr einer Belästigung oder eine witterungsbedingte Belastung sehr klein ist. Es kann auf das Mitführen eines Ersatzrades und von Werkzeugen zum Auswechseln eines Rades verzichtet werden. Der Platzbedarf für die kleine Druckgasflasche ist wesentlich kleiner als der Platzbedarf für ein Ersatzrad und Werkzeuge. Nebst dem frei werdenden Platz ist auch das Fahrzeug-Grundgewicht und damit der Energieverbrauch für das Fahren reduziert.

Zum Nachfüllen eines defekten Reifens wird vorzugsweise Druckgas in der Form von Stickstoff verwendet. Eine Druckflasche mit Stickstoff ist auch bei einer Unfall bedingten Beschädigung nicht mit einer erhöhten Brand- oder Explosionsgefahr verbunden.

Der Druckabfall in einem Reifen mit der Drucksicherungs-Vorrichtung ist beschränkt und dennoch einfach festzustellen. Wenn in einem Rad einer Achse ein Schlauch defekt ist, so besteht ein über das ABS-System, bzw. über das indirekte Reifendruck-Kontrollsystem, feststellbarer Drehzahl- bzw. Umfangsunterschied zwischen den beiden Rädern dieser Achse. Wenn das Fahrzeug geradeaus fährt, kann aufgrund des Drehzahlunterschiedes dieser beiden Räder mit genügender Sicherheit auf einen beschädigten Reifen hingewiesen werden. Auf aufwändige Direkt-Messungen von Raddrücken und/oder Abständen zwischen Achsbereichen und dem Boden kann verzichtet werden.

Die beschriebene einfache Erkennungsmöglichkeit eines Druckabfalls über Werte des ABS-Systems, bzw. des indirekten Reifendruck-Kontrollsystems, ist ein Vorteil der Drucksicherungs-Vorrichtung gegenüber der Verwendung von "run flat" Reifen, bei denen auch bei einem Druckabfall der Aussendurchmesser des Reifens aufgrund der relativ starren Seitenflächen nicht genügend abnimmt, so dass für das Erkennen eines Reifendefekts Druckmessungen nötig sind. Run flat Reifen benötigen zudem signifikant höhere Materialmengen und einen komplizierten Aufbau zum Gewährleisten lediglich einer eingeschränkten Weiterfahr-Möglichkeit.

Gemäss einer weiteren bevorzugten Ausführungsform ist jedem Schlauch der Drucksicherungs-Vorrichtung ein eigener Druckspeicher zugeordnet und die Verbindungen vom gemeinsamen Speiseanschluss zu den Schläuchen erfolgt parallel über Speiseleitungen, die zugeordneten Druckspeicher und daran anschliessende Nachfüllleitungen. Zwischen den Druckspeichern und den Schläuchen sind Druckreduzierventile angeordnet, welche gewährleisten, dass die Speisung jedes Schlauches bis zum Erreichen eines vorgegebenen Druckwertes im Reifen erfolgt und beim Unterschreiten des vorgegebenen Druckwertes im Reifen wieder einsetzt.

Gegebenenfalls ist zwischen jedem Druckreduzierventil und dem daran anschliessenden Schlauch ein Rückschlagventil angeordnet, welches das Rückströmen von Gas aus dem Schlauch gegen den Druckspeicher verhindert, wobei dann zum Entlüften der Schläuche an jedem Schlauch eine Entlüftungsleitung und an den Entlüftungsleitungen mindestens ein Entlüftungsventil angeschlossen ist. Das mindestens eine Entlüftungsventil umfasst für jede Entlüftungsleitung einen Verschlussbereich, wobei diese Verschlussbereiche vorzugsweise vorgespannt alle Verbindungen von den Entlüftungsleitungen zu einer Entlüftungsöffnung einzeln verschliessen. Dadurch wird sichergestellt, dass bei einem lecken Schlauch die anderen Schläuche nicht über ihre Entlüftungsleitungen Druckgas durch den defekten Schlauch an die Umgebung abgeben können.

Gemäss einer bevorzugten Ausführungsform ist das Entlüftungsventil analog zu einem Rückschlagventil, insbesondere zum vorne beschriebenen Speiseanschluss mit Verschlussbereichen für mehrere Leitungen, ausgebildet. Wenn nun die Bewegung der Verschlussbereiche von den Verbindungen zu den Entlüftungsleitungen weg bewegt wird, so kann Druckgas aus den Schläuchen abgelassen, oder auch bei einem höheren Druck auf der Seite der Entlüftungsöffnung Druckgas in die Schläuche eingefüllt werden.

Die Druckspeicher umfassen Formmittel, welche das Ausdehnen der Druckspeicher beim Einfüllen des Druckgases bzw. beim Aufbauen eines wesentlich über dem vorgegebenen Reifendruck liegenden Überdrucks einschränken. Der nötige Überdruck hängt vom Volumen des Druckspeichers, vom gewünschten Reifendruck und vom zu erzielenden Nachfüllvolumen im zugeordneten Schlauch ab, wobei sich das zu erzielende Nachfüllvolumen aus der Gesamtzahl der Schläuche, aus der maximalen Anzahl zu kompensierender defekter Schläuche und aus dem von den Schläuchen im Reifen auszufüllenden Volumen bestimmen lässt.

Wenn bei vier Schläuchen ein defekter Schlauch kompensierbar sein soll, so müssen die Druckspeicher der verbleibenden drei Schläuche zusammen das aus dem defekten Schlauch entwichene Volumen, also 1/4 des Reifeninnenraumes, bis zum Erreichen des gewünschten Reifendrucks nachfüllen können. Entsprechend muss ein Druckspeicher 1/12 des Reifeninnenraumes mit dem gewünschten Reifendruck befüllen können. Wenn das Volumen jedes Druckspeichers bei im Wesentlichen 1/12 des Reifeninnenraumes liegt, muss der Überdruck in jedem Druckspeicher mindestens dem doppelten Reifendruck entsprechen, damit bei einem defekten Bereich der Reifendruck über die verbleibenden drei Schläuche aufgebaut werden kann. Bei einem anderen Volumen der Druckspeicher ergibt sich ein entsprechend anderer nötiger Überdruck.

Die Schläuche müssen im Reifen innen an die Lauffläche anschliessend angeordnet sein und entsprechend müssen die Druckspeicher radial innerhalb der Schläuche positioniert sein. Nebst einer Anordnung im Radinnenraum zwischen Felge und Reifen, werden die Druckspeicher gemäss einer vorteilhaften Lösung an oder in der Felge angeordnet, wobei diese Ausführung so ausgebildet wird, dass das Montieren eines Reifens an der Felge mit den Druckspeichern nicht beeinträchtigt wird. Wenn sich die Druckspeicher an der Felge ringförmig um die Radachse erstrecken, so stellen Sie das gewünschte Druckgas zum Nachfüllen der Schläuche bereit und sie erhöhen zudem die Stabilität der Felge.

Bei einer bevorzugten Lösung sind mindestens vier, vorzugsweise aber mindestens fünf Druckspeicher eingesetzt, wobei die Druckspeicher vorzugsweise als kreisförmig um die Reifen- bzw. Felgenachse verlaufende Elemente radial gegen die Reifenachse hin an die zugeordneten Schläuche anschliessend verlaufen und bei einer vorteilhaften Lösung über lösbare Verbindung mit den Schläuchen oder gegebenenfalls miteinander verbunden sind.

Wenn die Druckspeicher im Innenraum zwischen Felge und Reifen angeordnet sind so werden die Umfangslängen der Druckspeicher so an einen zugehörigen Reifen angepasst, dass nach dem Anordnen der Schläuche und Druckspeicher im Reifen und dem Aufblasen der Schläuche bis zu einem ersten Füllgrad die der Reifenachse zugewandten kleinsten Umfangslinien der Druckspeicher bei einem Radius um die Reifenachse verlaufen, der um einen vorgegebenen Betrag grösser ist als der Innenradius der Reifen-Randlinien mit dem kleinsten Umfang des Reifens, wobei die Reifen-Randlinien im montierten Zustand an der Felge anliegen. Damit wird eine einfache Montage auf der Felge gewährleistet.

Die Schläuche und die Druckspeicher füllen nach dem vollständigen Druckaufbau in den Schläuchen und dem Aufbau eines Überdrucks in den Druckspeichern den gesamten Reifeninnenraum aus. Dazu kann es nötig sein, dass jeder Schlauch den zugeordneten etwas formstarrer ausgebildeten Druckspeicher zumindest teilweise umschliesst und so den ursprünglichen Freiraum zwischen der Felge und den Druckspeichern ausfüllt.

Die Zeichnungen erläutern die Erfindung anhand von Ausführungsbeispielen, auf die sie aber nicht eingeschränkt ist. Dabei zeigt
- Fig. 1: eine perspektivische Darstellung einer Drucksicherungs-Vorrichtung mit vier Schläuchen, mit je einer Speiseleitung für Druckgas, mit einem gemeinsamen Speiseanschluss und mit einer Verbindungseinrichtung, welche die Schläuche lösbar miteinander verbindet,
- Fig. 2 und 3: perspektivische Darstellungen von vier Schläuchen mit je einer Speiseleitung und mit an den Schläuchen angeordneten Verbindungsmitteln,
- Fig. 4: eine perspektivische Darstellung einer Drucksicherungs-Vorrichtung mit Felge, aufgeschnittenem Reifen und vier aufgeschnittenen Schläuchen, die je über eine Speiseleitung mit einem gemeinsamen Speiseanschluss an der Felge verbunden sind,
- Fig. 5: eine perspektivische Darstellung einer Drucksicherungs-Vorrichtung mit Felge, aufgeschnittenem Reifen, vier aufgeschnittenen Schläuchen, und vier aufgeschnittenen Druckspeichern,
- Fig. 6: eine perspektivische Darstellung einer Drucksicherungs-Vorrichtung mit vier Schläuchen, mit je einer Speiseleitung für Druckgas und mit einem gemeinsamen Speiseanschluss, der eine Speiseöffnung sowie für jede Speiseleitung einen Verschlussbereich umfasst,
- Fig. 6a und 6b: Längsschnitte durch einen Speiseanschluss in geschlossener bzw. offener Ventilposition,
- Fig. 6c: eine stirnseitige Ansicht des Speiseanschlusses gemäss Fig. 6a und 6b,
- Fig. 7a und 7b: perspektivische Darstellungen eines Ausschnitts einer Drucksicherungs-Vorrichtung, wobei die Ausschnitte Abschnitte von zwei Schläuchen und bei einem bzw. bei beiden eine Differenzdruck-Schliesseinrichtung zeigen,
- Fig. 7c: ein Schnitt durch einen Ausschnitt einer Drucksicherungs-Vorrichtung, wobei der Ausschnitt Abschnitte von vier Schläuchen und bei drei Schläuchen eine Differenzdruck-Schliesseinrichtung zeigt,
- Fig. 8: eine perspektivische Darstellung einer Drucksicherungs-Vorrichtung mit Felge, aufgeschnittenem Reifen und vier aufgeschnittenen gefüllten Schläuchen,
- Fig. 9: eine perspektivische Darstellung einer Drucksicherungs-Vorrichtung mit Felge, aufgeschnittenem Reifen und vier aufgeschnittenen Schläuchen, von denen einer defekt und die anderen gefüllt sind,
- Fig. 10: eine perspektivische Darstellung einer Drucksicherungs-Vorrichtung mit Felge, aufgeschnittenem Reifen, vier aufgeschnittenen gefüllten Schläuchen und vier aufgeschnittenen Druckspeichern,
- Fig. 11: eine perspektivische Darstellung einer Drucksicherungs-Vorrichtung mit Felge, aufgeschnittenem Reifen, vier aufgeschnittenen gefüllten Schläuchen und vier aufgeschnittenen Druckspeichern, die in der Felge ausgebildet sind,
- Fig. 12: eine perspektivische Darstellung einer Drucksicherungs-Vorrichtung mit Felge, aufgeschnittenem Reifen, vier aufgeschnittenen gefüllten Schläuchen, und drei zwischen den Schläuchen angeordneten ringförmigen Dämpfungselementen,
- Fig. 13: eine perspektivische Darstellung einer Drucksicherungs-Vorrichtung mit Felge, aufgeschnittenem Reifen, vier aufgeschnittenen gefüllten Schläuchen, und drei zwischen den Schläuchen angeordneten Zwischen-Schläuchen,
- Fig. 14: einen Ausschnitt aus einer Anordnung mit einem Schlauch und einem daran angeordneten Zwischen-Schlauch,
- Fig. 15a: eine perspektivische Darstellung einer Differenzdruck-Schliesseinrichtung und
- Fig. 15b und 15c: Schnitte durch eine Differenzdruck-Schliesseinrichtung im offenen bzw. geschlossenen Zustand.

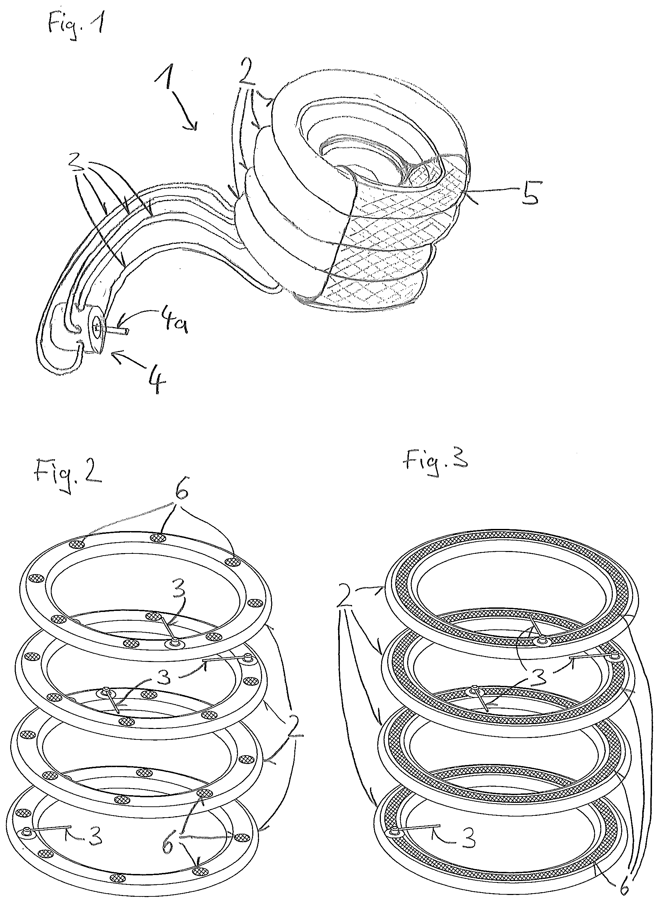

Fig. 1 zeigt eine Drucksicherungs-Vorrichtung mit vier kreisförmig geschlossenen Schläuchen 2, die nebeneinander um eine gemeinsame Achse verlaufend angeordnet sind. Jeder Schlauch 2 ist über eine Speiseleitung 3 mit einem gemeinsamen Speiseanschluss 4 verbunden. Die Schläuche 2 sind im aufgeblasenen Zustand über mindestens eine Verbindungseinrichtung zu einem Stapel lösbar verbunden, wobei die Schläuche 2 in Richtung der gemeinsamen Achse entlang ihres Umfangs mit Seitenbereichen je direkt aneinander anschliessen. Die Speiseleitungen 3 sind am gemeinsamen Speiseanschluss 4 lösbar befestigt. Der gemeinsame Speiseanschluss 4 umfasst eine Speiseöffnung 4a, über welche die Schläuche gefüllt und entleert werden können. In der dargestellten Ausführungsform wird die Verbindungseinrichtung von einem Flachmaterial 5 gebildet, das zumindest in einem Umfangsbereich der Schläuche hüllenförmig um diese angeordnet ist. Ein nicht dargestellter Kontakt- oder Überlappungsbereich umfasst eine Verbindungsanordnung, vorzugsweise mit einer lösbaren Klett-, Formschluss oder Haftverbindung.

Fig. 2 und 3 zeigen Schläuche 2 mit Verbindungsmitteln, die auf mindestens einer Seite der Schläuche Verbindungselemente 6 aufweisen, welche in Umfangsrichtung der Schläuche zumindest an zwei im Wesentlichen gleichmässig über den Umfang verteilten Stellen bzw. entlang des gesamten Umfangs angeordnet sind. Die Verbindungselemente 6 werden von Elementen für Klett-, Einrast- oder Formschlussverbindungen oder gegebenenfalls von Bereichen mit einem eine lösbare Verbindung erzielenden Klebstoff gebildet. Bei vorteilhaften Klettverbindungen wird jeder Schlauch in Richtung der Reifenachse auf einer Seite erste Klettelemente und auf der anderen Seite zweite Klettelemente aufweisen, wobei die ersten und die zweiten Klettelemente lösbar mit einander verbindbar sind. Beim Verbinden der Schläuche 2 werden die Speiseleitungen 3 vorzugsweise gegen die gemeinsame Achse hin weggeführt damit sie an einem gemeinsamen Speiseanschluss 4 bei einer Felge angeschlossen werden können.

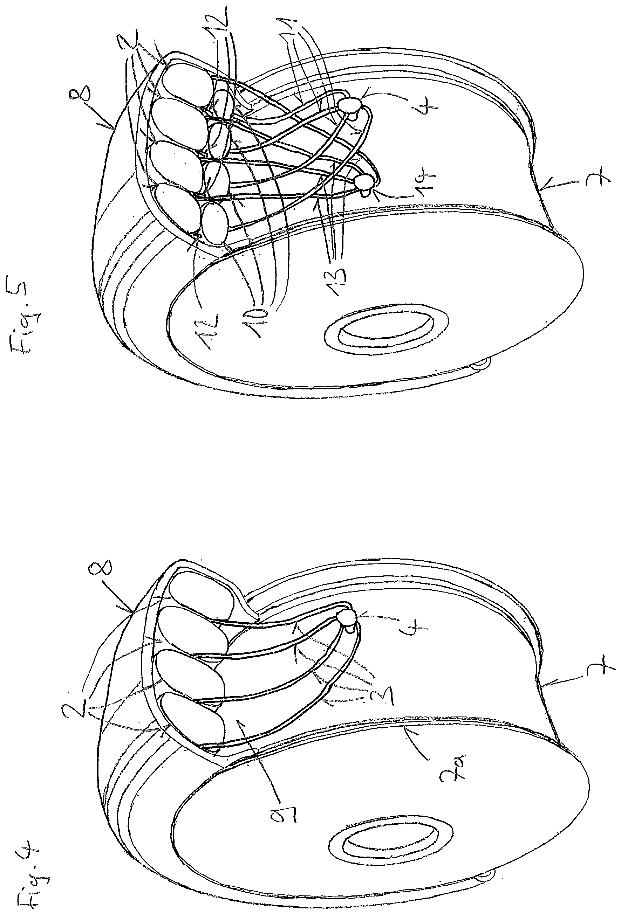

Fig. 4 zeigt einen Schlauchstapel zwischen einer Felge 7 und einem auf der Felge 7 montierten Reifen 8. Bei der Montage wurden zuerst die Speiseleitungen 3 der Schläuche 2 am gemeinsamen Speiseanschluss 4 angeschlossen, welcher an einer Durchführöffnung der Felge 7 angeordnet ist. Anschliessend wurden die Schläuche 2 über den gemeinsamen Speiseanschluss 4 bis zu einem ersten Füllgrad aufgeblasen, so dass die Schläuche 2 im Reifen 8 gehalten sind und einen gewünschten Freiraum 9 auf der der Felge 7 zugewandten Seite des Reifens 8 bereitstellen. In diesem Zustand ist die Montage des Reifens 8 auf der Felge 7 ohne Probleme durchführbar, weil der Freiraum 9 für den radial nach aussen vorstehenden Felgenrand 7a genügend gross ist.

Um den Freiraum 9 zu gewährleisten sind der Reifen 8 und die Umfangslängen der Schläuche 2 so aneinander angepasst, dass die Schläuche 2 nach dem Anordnen im Reifen 8 und dem Aufblasen bis zu einem ersten Füllgrad mit ihren der Reifenachse zugewandten kleinsten Umfangslinien bei einem Radius um die Reifenachse verlaufen, der um einen vorgegebenen Betrag grösser ist als der Innenradius der Reifen-Randlinien mit dem kleinsten Umfang des Reifens 8.

Fig. 5 zeigt eine Ausführungsform, bei der jedem Schlauch 2 ein eigener Druckspeicher 10 zugeordnet ist. Die Verbindungen vom gemeinsamen Speiseanschluss 4 zu den Schläuchen 2 erfolgt parallel über Speiseleitungen 11 in die zugeordneten Druckspeicher 10 und von diesen über Nachfüllleitungen 12 in die entsprechenden Schläuche 2. Zwischen den Druckspeichern 10 und den Schläuchen 2 sind nicht dargestellte Druckreduzierventile angeordnet, welche gewährleisten, dass die Speisung jedes Schlauches 2 bis zum Erreichen eines vorgegebenen Druckwertes im Reifen 8 erfolgt und beim Unterschreiten des vorgegebenen Druckwertes wieder einsetzt.

Gegebenenfalls ist zwischen jedem Druckreduzierventil und dem daran anschliessenden Schlauch 2 ein nicht dargestelltes Rückschlagventil angeordnet, welches das Rückströmen von Gas aus dem Schlauch 2 gegen den Druckspeicher 10 verhindert. Zumindest bei den Ausführungsformen mit Rückschlagventilen wird zum Entlüften der Schläuche 2 an jedem Schlauch 2 eine Entlüftungsleitung 13 und an den Entlüftungsleitungen 13 mindestens ein Entlüftungsventil 14 angeschlossen.

Die Druckspeicher 10 umfassen Formmittel, welche das Ausdehnen der Druckspeicher beim Einfüllen des Druckgases bzw. beim Aufbauen eines wesentlich über dem vorgegebenen Reifendruck liegenden Überdrucks einschränken. Der nötige Überdruck hängt vom Volumen des Druckspeichers, vom gewünschten Reifendruck und vom zu erzielenden Nachfüllvolumen im zugeordneten Schlauch ab, wobei sich das zu erzielende Nachfüllvolumen aus der Gesamtzahl der Schläuche, aus der maximalen Anzahl zu kompensierender defekter Schläuche und aus dem von den Schläuchen im Reifen auszufüllenden Volumen bestimmen lässt.

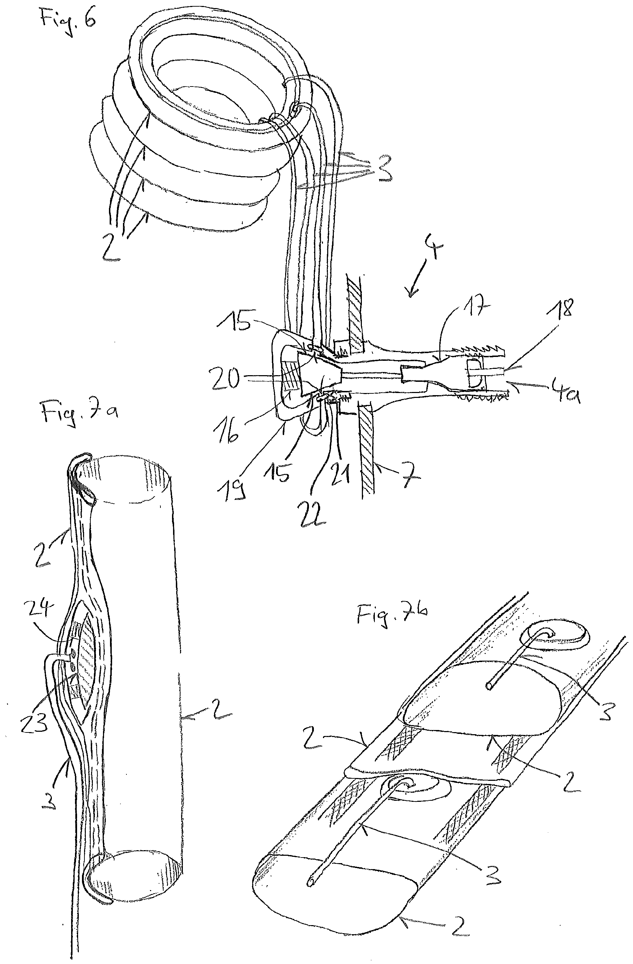

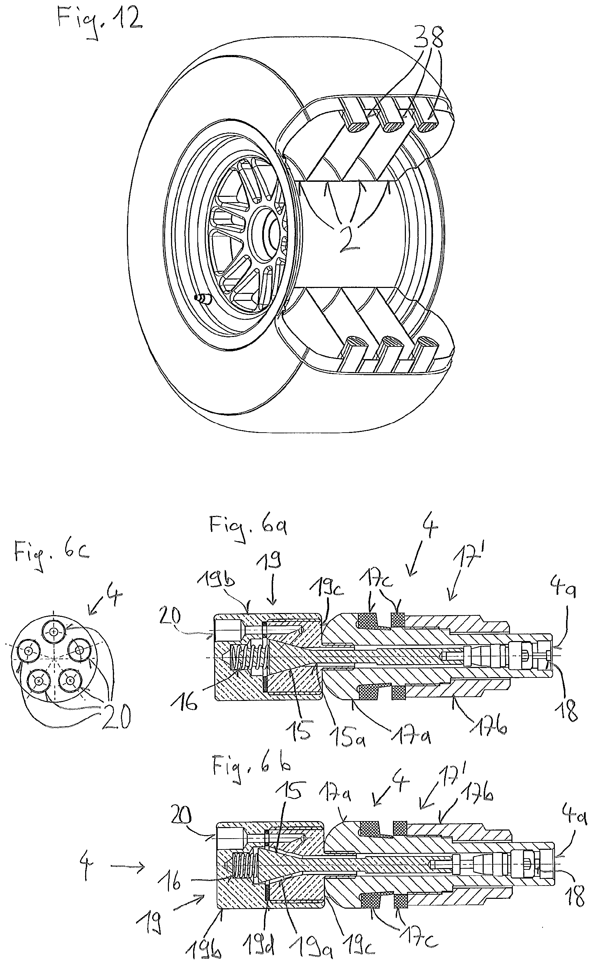

Fig. 6 zeigt eine schematische Darstellung eines an der Felge 7 angeordneten gemeinsamen Speiseanschlusses 4, der eine Speiseöffnung 4a sowie für jede Speiseleitung 3 einen Verschlussbereich 15 umfasst. Die Verschlussbereiche 15 werden von einer Vorspanneinrichtung 16, insbesondere einer Feder, vorgespannt, so dass alle Verbindungen von der Speiseöffnung 4a in die Speiseleitungen 3 einzeln verschlossen sind. Dadurch wird sichergestellt, dass bei einem lecken Schlauch 2 die anderen Schläuche 2 nicht über ihre Speiseleitungen 3 Druckgas durch den defekten Schlauch 2 an die Umgebung abgeben können.

In der dargestellten Ausführungsform ist die Speiseöffnung 4a des gemeinsamen Speiseanschlusses 4 mit einem Rückschlagventil 17 versehen, das mittels Einstossen eines zentralen Stifts 18 geöffnet werden kann. Die Bewegung dieses Stifts 18 bewegt auch die Verschlussbereiche 15 von den Verbindungen zu den Speiseleitungen 3 weg, so dass Druckgas aus den Schläuchen 2 abgelassen, oder bei einem höheren Druck auf der Seite der Speiseöffnung Druckgas in die Schläuche 2 eingefüllt werden kann. Es versteht sich von selbst, dass gegebenenfalls nur die vorgespannten Verschlussbereiche 15 vorgesehen sind, ohne zusätzliches Rückschlagventil 17.

In der dargestellten Ausführungsform nehmen die Abstände der Verschlussbereiche 15 entlang der Längsachse des Speiseanschlusses 4 zu bzw. ab. Die Schnittlinien der Verschlussbereiche 15 mit Normalebenen zur Längsachse können dabei gerade oder gekrümmt ausgebildet sein. Die Verschlussbereiche 15 werden von Teilflächen eines verschiebbaren Ventilkörpers gebildet, welcher in einem entsprechend ausgebildeten Gehäuse 19 mit Öffnungen 20 zu den Speiseleitungen 3 angeordnet ist.

Die Öffnungen 20 und die daran anschliessenden Speiseleitungen 3 sind über lösbare Verbindungen dicht verbindbar. In der dargestellten Ausführungsform sind an den Öffnungen 20 Ringnuten 21 ausgebildet und die Endbereiche der Speiseleitungen 3 umfassen entsprechende Ringwülste 22 zum Eingreifen in die Ringnuten 21. Weil die innere Querschnittfläche der Speiseleitungen 3 klein gewählt werden kann, sind die von den Eingriffs-Verbindungen aufzunehmenden Kräfte klein.

Die Wandstärke bzw. Formstabilität der Speiseleitungen 3 wird so hoch ausgebildet, dass sie auch offen bleiben, wenn sie von aussen mit gängigen Reifendrücken belastet sind. Diese Belastbarkeit ist für das Entleeren der Schläuche 2 nötig, weil ja die Speiseleitungen 3 im Innern des Reifens 8 von den Schläuchen 2 zum gemeinsamen Speiseanschluss 4 verlaufen und somit an ihrer Aussenseite mit dem Reifendruck belastet sind.

Fig. 6a, 6b und 6c zeigen eine weitere Ausführungsform des gemeinsamen Speiseanschlusses 4, der eine Speiseöffnung 4a sowie Öffnungen 20 zu den Speiseleitungen 3 und dazwischen von Verschlussbereichen 15 verschliessbare Verbindungen umfasst. In der Situation gemäss Fig. 6a werden die an einem zentralen konischen Abschnitt eines Ventilteils 15a ausgebildeten Verschlussbereiche 15 von der Feder 16 gegen den daran angepassten Aufnahmebereich 19a des Gehäuses 19 gedrückt, so dass alle Verbindungen von der Speiseöffnung 4a zu den Öffnungen 20 verschlossen sind. An den Öffnungen 20 können Speiseleitungen 3 über lösbare Verbindungen dicht angeschlossen werden.

In der Situation gemäss Fig. 6b ist die Speiseöffnung 4a des gemeinsamen Speiseanschlusses 4 aufgrund des eingestossenen zentralen Stifts 18, des damit verschobenen zentralen konischen Abschnitts des Ventilteils 15a und der dabei in Offenstellung gebrachten Verschlussbereiche 15 mit allen Öffnungen 20 verbunden. Druckgas kann über den Speiseanschluss 4 und nicht dargestellte Speiseleitungen in nicht dargestellte Schläuche eingetragen oder aus diesen abgelassen werden.

Das Gehäuse 19 umfasst zwei miteinander verschraubbare Gehäuseteile 19b und 19c und ein dazwischen angeordnetes Dichtungselement 19d, wobei der erste Gehäuseteil 19b die Öffnungen 20 aufweist sowie die Feder 16 aufnimmt und der zweite Gehäuseteil 19c über ein Gewinde mit der inneren Anschlussöffnung eines an einer Durchführungsöffnung der Felge 7 festsetzbaren Ventilabschnitts 17' verbunden ist. Der Ventilabschnitt 17' umfasst einen Hauptteil 17a und eine daran festschraubbare Hülse 17b. Elastische Anschlussringe 17c des Hauptteils 17a und der Hülse 17b ermöglichen ein Festklemmen des Ventilabschnitts 17' an der Durchführungsöffnung der Felge 7.

In der dargestellten Ausführungsform sind die Verschlussbereiche 15 an einem konischen Bereich mit kreisförmigem Querschnitt angeordnet, wobei dieser Bereich zu einem Ventilteil 15a gehört, welcher im entsprechend ausgebildeten Gehäuse 19 verschiebbar gelagert und mit dem zentralen Stift 18 verbunden ist.

Das in Fig. 5 dargestellte Entlüftungsventil 14 ist vorzugsweise gleich aufgebaut wie der gemeinsame Speiseanschluss 4. Anstelle der Speiseleitungen 3 treten beim Entlüftungsventil 14 die Entlüftungsleitungen 13.

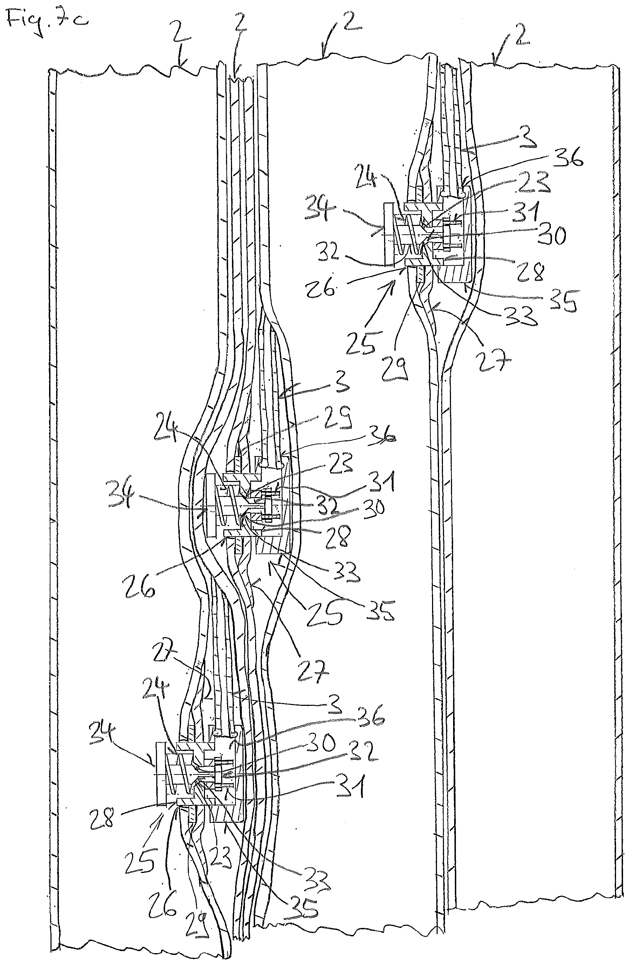

Anhand der Fig. 7a, 7b und 7c werden Ausführungsformen und Funktionsweisen von Differenzdruck-Schliesseinrichtungen erklärt. Bei den dargestellten Lösungen ist bei jeder Verbindung eines Schlauches 2 zu dessen Speiseleitung 3 ein Schliesselement 23 zum Verschliessen dieser Verbindung angeordnet. Das Schliesselement 23 wird von einer Offenstelleinrichtung, insbesondere einer Feder 24 mit einer vorgegebenen Offenstellkraft offengehalten. Bei mindestens zwei Schläuchen 2, die in einem Reifen 8 angeordnet und mit Druckgas gefüllt sind, wird nach dem Entstehen eines Lecks in einem Schlauch 2, der lecke Schlauch von den verbleibenden ganzen, Druck beaufschlagten Schläuchen 2 flachgedrückt. Dabei wird das Schliesselement 23 entgegen der Offenstellkraft in eine Schliessposition bewegt. Dadurch wird verhindert, dass beim Nachfüllen von Druckgas durch den gemeinsamen Speiseanschluss 4 eine unerwünscht hohe Menge des zugeführten Druckgases durch den Schlauch 2 mit dem Leck entweichen kann. Der überwiegende Anteil des zugeführten Druckgases gelangt in ganze Schläuche.

Fig. 7c zeigt am defekten Schlauch eine geschlossene Differenzdruck-Schliesseinrichtung und an zwei intakten Schläuchen offene Differenzdruck-Schliesseinrichtung. Die dargestellten Differenzdruck-Schliesseinrichtungen sind als Schlauchventile 25 ausgebildet und an Schlauchöffnungen 26 mit Befestigungsflicken 27 befestigt. Die Schlauchventile 25 umfassen ein Ventilgehäuse 28 von dem ein Befestigungsring 29 radial nach aussen vorsteht. Der Befestigungsring 29 liegt bei der Schlauchöffnung 26 aussen am Schlauch 2 an und wird vom mit dem Schlauch 2 verbundenen Befestigungsflicken 27 dicht am Schlauch 2 gehalten. Das Ventilgehäuse 28 umfasst einen verschliessbaren Durchlass 30 und eine Führungsanordnung 31 für einen beweglichen Verschlussteil 32 mit dem Schliesselement 23.

Der Verschlussteil 32 wird bei einem unversehrten Schlauch 2 von einer Feder 24 gegen die Offenstellung bzw. an einen Anschlag der Führungsanordnung 31 gedrückt, so dass der Durchlass 30 offen ist und durch die Speiseleitung 3 zugeführtes Druckgas in den Schlauch 2 einströmen kann.

Der bewegliche Verschlussteil 32 umfasst eine gegen das Innere des Schlauches 2 vorstehende Betätigungsfläche 34. Bei einem zusammengedrückten Schlauch 2 wird die Betätigungsfläche 34 und damit der bewegliche Verschlussteil 32 gegen die Federkraft der Feder 24 in die geschlossenen Stellung bewegt, so dass der Durchlass 30 geschlossen ist und durch die Speiseleitung 3 zugeführtes Druckgas nicht in einen defekten Schlauch 2 einströmen kann.

Das Schlauchventil 25 umfasst ein am Ventilgehäuse 28 festgesetztes Abschlussteil 35 mit einer Anschlussöffnung 36 für die Speiseleitung 3. Das Schlauchventil 25 kann kompakt und kantenfrei ausgebildet werden, so dass auch bei starken Belastungen aufgrund des Druckes und der Rollbewegung des Reifens keine Gefahr für eine Verletzung der Schläuche besteht.

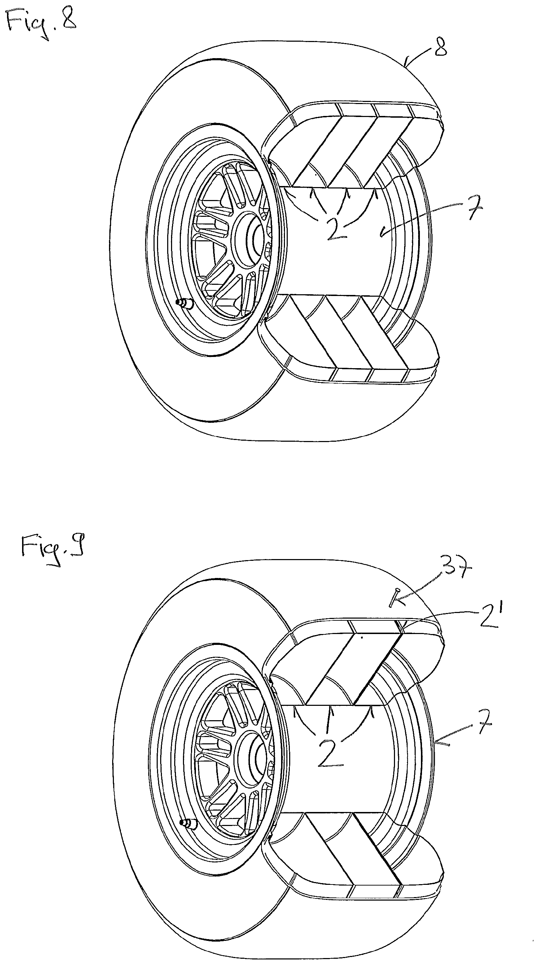

Fig. 8 zeigt eine Felge 7, einen aufgeschnittenen Reifen 8 und vier zwischen Felge 7 und Reifen 8 aufgeblasene Schläuche 2 in einer aufgeschnittenen Ansicht.

Gemäss Fig. 9 ist einer der vier Schläuche 2 von einem Fremdkörper, beispielsweise einem Nagel 37, beschädigt, so dass die Luft aus dem beschädigten Schlauch 2' austritt. Weil die anderen Schläuche 2 immer noch mit einem Überdruck beaufschlagt sind, dehnen sie sich aus, bis der defekte Schlauch 2' flach ist und die anderen Schläuche mit je ähnlichem Volumen den Raum zwischen Felge 7 und Reifen 8 ausfüllen.

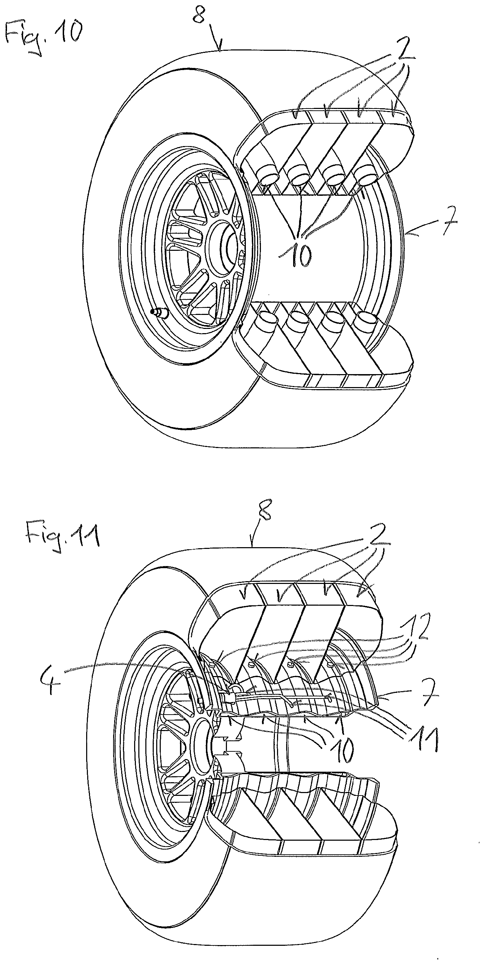

Wenn bei der in Fig. 5 dargestellte Ausführungsform mit Druckspeichern 10 die Schläuche 12 vollständig gefüllt sind, werden die Druckspeicher 10 gegebenenfalls etwas gegen die Felge 7 zusammengedrückt und der Raum zwischen Felge 7 und Reifen 8 ist im Wesentlichen von den Schläuchen 2 und den Druckspeichern 10 ausgefüllt. Weil die Druckspeicher 10 aber vorzugsweise wenig komprimierbar sind, werden gemäss Fig. 10 die Schläuche 2 insbesondere so mit den Druckspeichern 10 verbunden, dass sich die Schläuche 2 auf beiden Seiten des zugeordneten Druckspeichers 10 gegen die Felge 7 hin ausdehnen, so dass die Druckspeicher 10 von Schlauchbereichen umgeben sind.

Bei der Ausführungsform gemäss Fig. 11 sind die Druckspeicher 10 in der Felge 7 ausgebildet, beispielsweise indem zwei gewellte Bleche spiegelbildartig angeordnet und bei Wellentälern miteinander dicht verbunden sind. Zwischen den ringförmigen Verbindungslinien sind ringförmige Kammern für die Druckspeicher 10 ausgebildet. Von einem gemeinsamen Speiseanschlusses 4 führen Speiseleitungen 11 in die zugeordneten Druckspeicher 10 und von diesen Nachfüllleitungen 12 in die entsprechenden Schläuche 2. Zwischen den Druckspeichern 10 und den Schläuchen 2 sind nicht dargestellte Druckreduzierventile angeordnet, welche gewährleisten, dass die Speisung jedes Schlauches 2 bis zum Erreichen eines vorgegebenen Druckwertes im Reifen 8 erfolgt und beim Unterschreiten des vorgegebenen Druckwertes wieder einsetzt.

Gegebenenfalls ist zwischen jedem Druckreduzierventil und dem daran anschliessenden Schlauch 2 ein nicht dargestelltes Rückschlagventil angeordnet, welches das Rückströmen von Gas aus dem Schlauch 2 gegen den Druckspeicher 10 verhindert. Zumindest bei den Ausführungsformen mit Rückschlagventilen wird zum Entlüften der Schläuche 2 an jedem Schlauch 2 eine Entlüftungsleitung und an den Entlüftungsleitungen mindestens ein Entlüftungsventil angeschlossen.

Fig. 12 zeigt eine Ausführungsform, bei der ringförmige Dämpfungselemente 38 zwischen den aneinander anliegenden Schlauchwänden, vorzugsweise in der Nähe der Innenfläche des Reifens 8, angeordnet sind. Bei solchen Dämpfungselementen 38 weichen beide Schlauchwände etwas von der radialen Ausrichtung ab. Die radial ausgerichteten Abschnitte der Schläuche 2 drücken in Komprimierphasen auf das Dämpfungselement, welches die Komprimierung aufnehmen kann. Dazu ist das Dämpfungselement elastisch ausgebildet, gegebenenfalls aus Moosgummi oder aus einem genügend elastischen bzw. dämpfungsfähigen Kunststoff. Die von den Dämpfungselementen aufgenommenen Kräfte reduzieren die Belastung der Schlauchwände.

Ringförmige Dämpfungselemente 38 zwischen benachbarten Schläuchen 2 übernehmen in speziellen Ausführungsformen nebst der Dämpfungsfunktion auch eine Verbindungsunktion. Dazu umfassen sie zumindest Bereiche mit Klettelementen, formschlüssigen Verbindungselementen oder lösbarem Kleber.

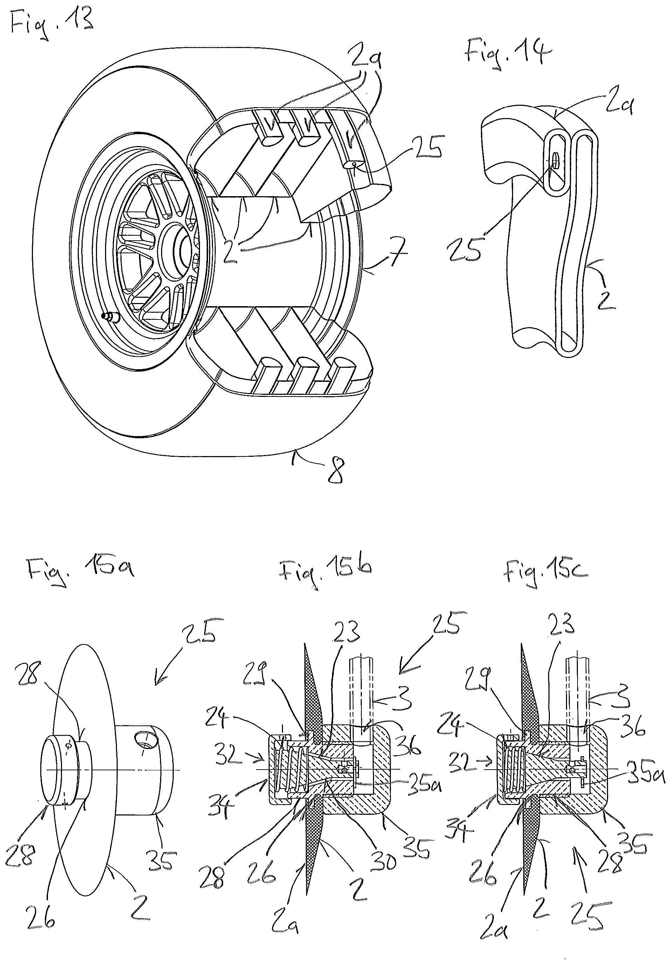

Fig. 13 und 14 zeigen eine Ausführungsform mit Zwischen-Schläuchen 2a in Bereichen bei den aneinander anliegenden Schlauchwänden der Schläuche 2. Die Zwischen-Schläuche 2a schliessen direkt an die Innenfläche des Reifens 8 an und haben im Druck beaufschlagten Zustand des Reifens 8 in Ebenen durch die Reifenachse kleinere Querschnittflächen als die anderen Schläuche 2. In einer bevorzugten Ausführungsform ist jeder Zwischen-Schlauch 2a an mindestens einem Schlauch 2 befestigt. Insbesondere ist er an beiden angrenzenden Schläuchen 2 befestigt, so dass nach dem Aufblasen der Schläuche 2 und Zwischen-Schläuche 2a die in Fig. 13 dargestellten Lagen der Schläuche 2 und Zwischen-Schläuche 2a sichergestellt ist.

Jeder Zwischen-Schlauch 2a umfasst eine Speiseleitung und ist mit einem gemeinsamen Speiseanschluss verbunden. Bei der dargestellten Ausführungsform verläuft die Verbindung des Zwischen-Schlauches 2a zum gemeinsamen Speiseanschluss über einen benachbarten Schlauch 2 und vom benachbarten Schlauch über dessen Speiseleitung zum gemeinsamen Speiseanschluss. Zur Verbindung des Zwischen-Schlauches 2a mit dem Schlauch 2 könnte eine Speiseleitung eingesetzt werden. In der Ausführung gemäss Fig. 13 wird die Verbindung direkt über eine in die aneinander anliegenden Schlauchwände eingesetzte Differenzdruck-Schliesseinrichtung, vorzugsweise über ein Schlauchventil 25, erzielt. Diese macht die Verbindung zwischen dem Zwischen-Schlauch 2a und dem damit verbundenen Schlauch 2 bei defektem Zwischen-Schlauch 2a mittels des Drucks mindestens eines intakten Schlauches verschliessbar.

Die Fig. 15a, 15b und 15c zeigen eine Differenzdruck-Schliesseinrichtung in der Form eines Schlauchventils 25 das dicht in eine Schlauchöffnung 26 eingesetzt ist. Das Schlauchventil 25 umfasst ein Ventilgehäuse 28 von dem ein Befestigungsring 29 radial nach aussen vorsteht. Der Befestigungsring 29 ist dicht mit dem Schlauch 2, bzw. mit dem Zwischen-Schlauch 2a verbunden. Das Ventilgehäuse 28 umfasst einen verschliessbaren Durchlass 30 und einen im Ventilgehäuse 28 beweglichen Verschlussteil 32 mit dem Schliesselement 23. Der Verschlussteil 32 wird bei einem unversehrten Schlauch 2 oder bei einem unversehrten Zwischen-Schlauch 2a von einer Feder 24 in die Offenstellung an einen Anschlag 35a gedrückt, so dass der Durchlass 30 offen ist und durch die Speiseleitung 3 oder von einem Schlauch 2 zugeführtes Druckgas in den Schlauch 2 oder in den Zwischen-Schlauch 2a einströmen kann.

Der bewegliche Verschlussteil 32 umfasst eine gegen das Innere des Schlauches 2 oder des Zwischen-Schlauches 2a vorstehende Betätigungsfläche 34. Bei einem zusammengedrückten Schlauch 2 bzw. Zwischen-Schlauch 2a wird die Betätigungsfläche 34 und damit der bewegliche Verschlussteil 32 gegen die Federkraft der Feder 24 in die geschlossene Stellung bewegt, so dass der Durchlass 30 vom Schliesselement 23 abgeschlossen ist und durch die Speiseleitung 3 oder vom Schlauch 2 zugeführtes Druckgas nicht in einen defekten Schlauch 2 bzw. Zwischen-Schlauch 2a einströmen kann.

Das Schlauchventil 25 umfasst ein am Ventilgehäuse 28 festgesetztes Abschlussteil 35 mit einer Anschlussöffnung 36 für die Speiseleitung 3 oder zum Schlauch 2. Das Schlauchventil 25 ist kompakt und kantenfrei ausgebildet, so dass auch bei starken Belastungen aufgrund des Druckes und der Rollbewegung des Reifens keine Gefahr für eine Verletzung der Schläuche besteht.

In der Ausführung gemäss Fig. 14 umfasst die Verbindung vom Zwischen-Schlauch 2a zum Schlauch 2 im Wesentlichen nur ein Schlauchventil 25, wobei der Schlauch 2 und der Zwischen-Schlauch 2a bei ihren zusammenfallenden Schlauchöffnung 26 miteinander verbunden sind und dicht ans Schlauchventil 25 anschliessen. Zur Verbindung des Zwischen-Schlauches mit mindestens einem Schlauch 2 kann ein Verbindungsmittel eingesetzt, das an mindestens einem Schlauch 2, 2a angeordnet ist und auf mindestens einer Seite des mindestens einen Schlauches 2, 2a angeordnete Verbindungselemente 6 umfasst, welche in Umfangsrichtung des mindestens einen Schlauches 2, 2a zumindest an zwei im Wesentlichen gleichmässig über den Umfang verteilten Stellen angeordnet sind, wobei diese Verbindungselemente 6 vorzugsweise von Elementen für Klettverbindungen oder gegebenenfalls von Bereichen mit einem eine Verbindung erzielenden Klebstoff gebildet sind.

Eine Differenzdruck-Schliesseinrichtung gemäss Fig. 15a, 15b und 15c kann auch vorteilhaft bei jeder in Fig. 7a, 7b und 7c dargestellten Verbindung von einer Speiseleitung 3 zum daran angeschlossenen Schlauch 2 eingesetzt werden.

## Patentansprüche

1. Drucksicherungs-Vorrichtung (1) für Druckgas gefüllte Räder, bei denen in einem Reifen (8) mindestens zwei kreisförmig geschlossene Schläuche (2) nebeneinander um die Reifenachse verlaufend angeordnet werden und der Reifen (8) auf einer Felge (7) montierbar ist, **dadurch gekennzeichnet, dass** die Drucksicherungs-Vorrichtung (1) mindestens zwei, vorzugsweise aber mindestens vier, insbesondere mindestens fünf, Schläuche (2), einen gemeinsamen Speiseanschluss und von jedem Schlauch (2) eine Speiseleitung (3) zum gemeinsamen Speiseanschluss (4) umfasst, wobei bei jeder Speiseleitung (3) zwischen dem Schlauch (2) und dem gemeinsamen Speiseanschluss (4) eine anschliessbare und lösbare Verbindung ausgebildet ist und zu jedem Schlauch eine Differenzdruck-Schliesseinrichtung (25) eingesetzt ist, welche die Verbindung durch den gemeinsamen Speiseanschluss (4) zu einem defekten Schlauch mittels des Drucks mindestens eines intakten Schlauches verschliessbar macht.

2. Drucksicherungs-Vorrichtung (1) nach Anspruch 1, **dadurch gekennzeichnet, dass** die Schläuche (2) über eine vom Reifen getrennte Verbindungseinrichtung (5, 6) zu einem Stapel aus entlang ihres Umfangs mit Seitenbereichen je direkt aneinander anschliessenden Schläuchen (2) lösbar verbunden sind.

3. Drucksicherungs-Vorrichtung (1) nach Anspruch 1 oder 2, **dadurch gekennzeichnet, dass** die Verbindungseinrichtung (5, 6) mindestens ein Verbindungsmittel umfasst, das an mindestens einem Schlauch (2) angeordnet ist oder das die Schläuche (2) zumindest teilweise umschliesst.

4. Drucksicherungs-Vorrichtung (1) nach einem der Ansprüche 1 bis 3, **dadurch gekennzeichnet, dass** die Drucksicherungs-Vorrichtung (1) einen Reifen (8) umfasst und die Umfangslängen der Schläuche (2) so an diesen Reifen (8) angepasst sind, dass sie nach dem Anordnen im Reifen (8) und dem Aufblasen bis zu einem ersten Füllgrad mit ihren der Reifenachse zugewandten kleinsten Umfangslinien bei einem Radius um die Reifenachse verlaufen, der um einen vorgegebenen Betrag grösser ist als der Innenradius der Reifen-Randlinien mit dem kleinsten Umfang des Reifens (8), wobei die Reifen-Randlinien im montierten Zustand an einer Felge (7) anliegen.

5. Drucksicherungs-Vorrichtung (1) nach einem der Ansprüche 1 bis 4, **dadurch gekennzeichnet, dass** die Drucksicherungs-Vorrichtung (1) einen Reifen (8) und eine Felge (7) umfasst und die Schläuche (2) in diesem Reifen (8) und der Reifen (8) mit den Schläuchen (2) auf dieser Felge (7) angeordnet ist, wobei die Speiseleitungen (3) am gemeinsamen Speiseanschluss (4) angeschlossen sind, der gemeinsame Speiseanschluss (4) an einer Durchführöffnung der Felge (7) angeordnet ist und eine Speiseöffnung (4a) sowie für jede Speiseleitung (3) einen Verschlussbereich (15) umfasst.

6. Drucksicherungs-Vorrichtung (1) nach Anspruch 5, **dadurch gekennzeichnet, dass** die Drucksicherungs-Vorrichtung (1) für jeden Schlauch (2, 2a) eine Differenzdruck-Schliesseinrichtung umfasst, welche die Verbindung durch den gemeinsamen Speiseanschluss (4) zu einem defekten Schlauch (2, 2a) verschliessbar macht, wobei jedem Schlauch (2, 2a) ein Schliesselement (23) zugeordnet ist, welches bei einem defekten Schlauch (2, 2a) aufgrund eines Überdrucks in mindestens einem intakten Schlauch (2) die Verbindung von der Speiseöffnung (4a) in den defekten Schlauch (2, 2a) verschliesst.

7. Drucksicherungs-Vorrichtung (1) nach Anspruch 6, **dadurch gekennzeichnet, dass** die Schliesselemente (23) der Differenzdruck-Schliesseinrichtung bei den Verbindungen der Schläuche (2, 2a) zu deren Speiseleitungen (3) angeordnet sind, wobei jedes Schliesselement (23) von einer Offenstelleinrichtung mit einer vorgegebenen Offenstellkraft offengehalten wird, bei mindestens zwei Schläuchen (2), die in einem Reifen (4) angeordnet und ursprünglich mit Druckgas gefüllt sind, nach dem Entstehen eines Lecks in einem Schlauch (2, 2a) der mit Druckgas gefüllte mindestens eine verbleibende ganze Schlauch (2) den Schlauch (2) mit dem Leck flachdrückt und dabei dessen Schliesselement (23) entgegen der Offenstellkraft in eine Schliessposition bewegt, so dass beim Nachfüllen von Druckgas durch den gemeinsamen Speiseanschluss (4) das zugeführte Druckgas nicht durch den Schlauch (2, 2a) mit dem Leck entweichen kann, sondern den mindestens einen anderen Schlauch (2, 2a) füllt.

8. Drucksicherungs-Vorrichtung (1) nach einem der Ansprüche 1 bis 7, **dadurch gekennzeichnet, dass** die Verbindungseinrichtung (5, 6) mindestens ein Verbindungsmittel umfasst, das an mindestens einem Schlauch (2, 2a) angeordnet ist und auf mindestens einer Seite des mindestens einen Schlauches (2, 2a) angeordnete Verbindungselemente (6) umfasst, welche in Umfangsrichtung des mindestens einen Schlauches (2, 2a) zumindest an zwei im Wesentlichen gleichmässig über den Umfang verteilten Stellen angeordnet sind, wobei diese Verbindungselemente (6) vorzugsweise von Elementen für Klettverbindungen oder gegebenenfalls von Bereichen mit einem eine lösbare Verbindung erzielenden Klebstoff gebildet sind.

9. Drucksicherungs-Vorrichtung (1) nach Anspruch 8, **dadurch gekennzeichnet, dass** jeder Schlauch (2, 2a) in Richtung der Reifenachse auf einer Seite erste Klettelemente und auf der anderen Seite zweite Klettelemente umfasst, wobei die ersten und die zweiten Klettelemente lösbar mit einander verbindbar sind.

10. Drucksicherungs-Vorrichtung (1) nach einem der Ansprüche 1 bis 9, **dadurch gekennzeichnet, dass** jedem Schlauch (2) ein eigener Druckspeicher (10) zugeordnet ist und die Verbindungen vom gemeinsamen Speiseanschluss (4) zu den Schläuchen (2) parallel über Speiseleitungen (11), die zugeordneten Druckspeicher (10) und daran anschliessende Nachfüllleitungen (12) erfolgen, wobei zwischen den Druckspeichern (10) und den Schläuchen (2) Druckreduzierventile angeordnet sind, welche gewährleisten, dass die Speisung jedes Schlauches (2) bis zum Erreichen eines vorgegebenen Druckwertes im Reifen (8) erfolgt und beim Unterschreiten des vorgegebenen Druckwertes im Reifen (8) wieder einsetzt, wobei vorzugsweise zwischen jedem Druckreduzierventil und dem daran anschliessenden Schlauch (2) ein Rückschlagventil angeordnet ist, welches das Rückströmen von Gas aus dem Schlauch (2) gegen den Druckspeicher (10) verhindert, und insbesondere zum Entlüften der Schläuche (2) mindestens ein Entlüftungsventil (14) an die Schläuche (2) angeschlossen ist.

11. Drucksicherungs-Vorrichtung (1) nach Anspruch 10, **dadurch gekennzeichnet, dass** mindestens vier, vorzugsweise aber mindestens fünf Druckspeicher (10) eingesetzt sind, wobei die Druckspeicher (10) vorzugsweise als kreisförmig um die Reifenachse verlaufende Elemente radial gegen die Reifenachse hin an die zugeordneten Schläuche (2) anschliessend verlaufen und vorzugsweise über lösbare Verbindung mit den Schläuchen (2) oder miteinander verbunden sind.

12. Drucksicherungs-Vorrichtung (1) nach Anspruch 11, **dadurch gekennzeichnet, dass** die Umfangslängen der Druckspeicher (10) so an einen zugehörigen Reifen (8) angepasst sind, dass nach dem Anordnen der Schläuche (2) und Druckspeicher (10) im Reifen (8) und dem Aufblasen der Schläuche (2) bis zu einem ersten Füllgrad die der Reifenachse zugewandten kleinsten Umfangslinien der Druckspeicher (10) bei einem Radius um die Reifenachse verlaufen, der um einen vorgegebenen Betrag grösser ist als der Innenradius der Reifen-Randlinien mit dem kleinsten Umfang des Reifens (8), wobei die Reifen-Randlinien im montierten Zustand an der Felge (7) anliegen.

13. Verfahren zum Sicherstellen eines vorgegebenen Druckwertes in einer Drucksicherungs-Vorrichtung (1) nach Anspruch 5, **dadurch gekennzeichnet, dass** nach einer Druckreduktion aufgrund eines defekten Schlauches (2) eine Druckgasquelle, vorzugsweise eine Druchgasflasche, an den gemeinsamen Speiseanschluss angeschlossen wird und in die dichten Schläuche (2) im Wesentlichen das aus dem defekten Schlauch entwichene Gasvolumen eingefüllt wird bis zum Erreichen eines vorgegebenen Druckwertes im Reifen (8), wobei zu jedem Schlauch (2) eine Differenzdruck-Schliesseinrichtung eingesetzt ist und die Differenzdruck-Schliesseinrichtung zum defekten Schlauch (2) die Verbindung durch den gemeinsamen Speiseanschluss zum defekten Schlauch mittels des Drucks mindestens eines intakten Schlauches verschliesst.

14. Verfahren nach Anspruch 13, **dadurch gekennzeichnet, dass** das zum Einfüllen verwendete Gas aus der Druckflasche Stickstoff ist.

## Claims

1. A pressure safeguard device (1) for wheels filled with compressed gas, in which at least two tubes (2) which are closed in a circular fashion are arranged next to one another in a tire (8) in such a way as to run around the tire axis and the tire (8) can be installed on a rim (7), **characterized in that** the pressure safeguard device (1) comprises at least two, but preferably at least four, in particular at least five tubes (2), a common supply connection (4), and a supply line (3) from each tube (2) to the common supply connection (4), wherein, on each supply line (3), a connectable and releasable connection is formed between the tube (2) and the common supply connection (4) and wherein a differential pressure closing device (25) is used for each tube (2), said differential pressure closing device (25) makes it possible to close the connection through the common supply connection (4) to the defective tube (2) by using the pressure of at least one intact tube (2).

2. The pressure safeguard device (1) according to claim 1, **characterized in that** the tubes (2) are releasably connected, by means of a connection device (5, 6) which is separate from the tire, so as to form a stack of tubes (2) which directly adjoin one another around their circumference by way of side regions.

3. The pressure safeguard device (1) according to claim 1 or 2, **characterized in that** the connection device (5, 6) comprises at least one connection means which is arranged on at least one tube (2) or which at least partially surrounds the tubes (2).

4. The pressure safeguard device (1) according to any of claims 1 to 3, **characterized in that** the pressure safeguard device (1) comprises a tire (8) and the circumferential lengths of the tubes (2) are adapted to said tire (8) in such a way that, after being arranged in the tire (8) and inflated to a first degree of filling, they run with their smallest circumferential lines facing toward the tire axis around the tire axis at a radius which is a predefined amount larger than the inner radius of the tire edge lines with the smallest circumference of the tire (8), wherein the tire edge lines bear against a rim (7) in the installed state.

5. The pressure safeguard device (1) according to any of claims 1 to 4, **characterized in that** the pressure safeguard device (1) comprises a tire (8) and a rim (7) and the tubes (2) in said tire (8) and the tire (8) with the tubes (2) is arranged on said rim (7), wherein the supply lines (3) are connected to the common supply connection (4), the common supply connection (4) is arranged at a through-opening of the rim (7) and comprises a supply opening (4a) and, for each supply line (3), a closure region (15).

6. The pressure safeguard device (1) according to claim 5, **characterized in that** the pressure safeguard device (1) comprises for each tube (2, 2a) a differential pressure closing device which makes it possible to close the connection through the common supply connection (4) to a defective tube (2, 2a), wherein each tube (2, 2a) is assigned a closing element (23) which, in the event of a defective tube (2, 2a), closes the connection from the supply opening (4a) into the defective tube (2, 2a) as a result of an overpressure in at least one intact tube (2).

7. The pressure safeguard device (1) according to claim 6, **characterized in that** the closing elements (23) of the differential pressure closing device are arranged at the connections of the tubes (2, 2a) to their supply lines (3), wherein each closing element (23) is kept open by an opening device with a predefined opening force, in the case of at least two tubes (2) which are arranged in a tire (4) and are originally filled with compressed gas, after a leak has occurred in one tube (2, 2a) the at least one remaining intact tube (2) filled with compressed gas flattens the tube (2) with the leak and thereby moves the closing element (23) thereof into a closed position counter to the opening force so that, when compressed gas is topped up through the common supply connection (4), the supplied compressed gas cannot escape through the tube (2, 2a) with the leak but rather fills the at least one other tube (2, 2a).

8. The pressure safeguard device (1) according to any of claims 1 to 7, **characterized in that** the connection device (5, 6) comprises at least one connection means which is arranged on at least one tube (2, 2a) and comprises connection elements (6) which are arranged on at least one side of the at least one tube (2, 2a) and which are arranged in the circumferential direction of the at least one tube (2, 2a) at least at two locations distributed substantially evenly around the circumference, wherein said connection elements (6) are preferably formed of elements for hook-and-loop connections or optionally of regions containing an adhesive which achieves a releasable connection.

9. The pressure safeguard device (1) according to claim 8, **characterized in that** each tube (2, 2a) comprises first hook-and-loop elements on one side in the direction of the tire axis and second hook-and-loop elements on the other side, wherein the first and the second hook-and-loop elements can be releasably connected to one another.

10. The pressure safeguard device (1) according to any of claims 1 to 9, **characterized in that** each tube (2) is assigned its own pressure accumulator (10) and the connections from the common supply connection (4) to the tubes (2) take place in a parallel manner via supply lines (11), the associated pressure accumulators (10) and top-up lines (12) connected thereto, wherein pressure-reducing valves are arranged between the pressure accumulators (10) and the tubes (2), which pressure-reducing valves ensure that the supply to each tube (2) takes place until a predefined pressure value is reached in the tire (8) and starts again when there is a drop below the predefined pressure value in the tire (8), wherein a check valve is preferably arranged between each pressure-reducing valve and the tube (2) connected thereto, which check valve prevents gas from flowing back out of the tube (2) toward the pressure accumulator (10), and in particular at least one vent valve (14) is connected to the tubes (2) for venting the tubes (2).

11. The pressure safeguard device (1) according to claim 10, **characterized in that** at least four, but preferably at least five pressure accumulators (10) are used, wherein the pressure accumulators (10), preferably as elements running in a circular fashion around the tire axis, then run radially at the associated tubes (2) toward the tire axis and are connected to the tubes (2) or to one another preferably via a releasable connection.

12. The pressure safeguard device (1) according to claim 11, **characterized in that** the circumferential lengths of the pressure accumulators (10) are adapted to an associated tire (8) in such a way that, once the tubes (2) and the pressure accumulators (10) have been arranged in the tire (8) and the tubes (2) have been inflated to a first degree of filling, the smallest circumferential lines of the pressure accumulators (10) facing toward the tire axis run around the tire axis at a radius which is a predefined amount larger than the inner radius of the tire edge lines with the smallest circumference of the tire (8), wherein the tire edge lines bear against the rim (7) in the installed state.

13. A method for ensuring a predefined pressure value in a pressure safeguard device (1) according to claim 5, **characterized in that**, after a reduction in pressure due to a defective tube (2), a compressed gas source, preferably a compressed gas cylinder, is connected to the common supply connection (4) and substantially the gas volume that has escaped from the defective tube is filled into the leaktight tubes (2) until a predefined pressure value is reached in the tire (8) and wherein a differential pressure closing device (25) is used for each tube (2), said differential pressure closing device (25) makes it possible to close the connection through the common supply connection (4) to the defective tube (2) by using the pressure of at least one intact tube (2).

14. The method according to claim 13, **characterized in that** the gas used for filling from the pressure cylinder is nitrogen.

## Revendications

1. Dispositif de maintien de la pression (1) pour des roues remplies de gaz sous pression, dans lesquelles au moins deux boyaux (2) fermés en cercle sont disposés l'un à côté de l'autre dans un pneumatique (8) autour de l'axe du pneumatique et le pneumatique (8) peut être monté sur une jante (7), **caractérisé en ce que** le dispositif de maintien de la pression (1) présente au moins deux boyaux (2) mais de préférence quatre, en particulier cinq, un raccord d'alimentation commun et une conduite d'alimentation (3) qui relie chaque boyau (2) au raccord d'alimentation commun (4), une communication qui peut être raccordée et détachée étant prévue sur chaque conduite d'alimentation (3) entre le boyau (2) et le raccord d'alimentation commun (4), et un dispositif de fermeture à pression différentielle (25) étant inséré au niveau de chaque boyau pour fermer la communication entre le raccord d'alimentation commun et un boyau défectueux au moyen de la pression d'au moins un boyau intact.

2. Dispositif de maintien de la pression (1) selon la revendication 1, **caractérisé en ce que** les boyaux (2) sont reliés d'une façon pouvant être défaite, par une installation de mise en communication (5, 6) séparée des pneumatiques, pour former une pile de boyaux (2) raccordés directement les uns aux autres le long de leur circonférence par des parties latérales.

3. Dispositif de maintien de la pression (1) selon la revendication 1 ou 2, **caractérisé en ce que** l'installation de mise en communication (5, 6) comprend au moins un moyen de mise en communication qui est disposé sur au moins un boyau (2) et entoure au moins partiellement les boyaux (2).

4. Dispositif de maintien de la pression (1) selon l'une des revendications 1 à 3, **caractérisé en ce que** le dispositif de maintien de la pression (1) comprend un pneumatique (8) et les longueurs de périmètre des boyaux (2) sont adaptées à ce pneumatique (8) de telle manière qu'après avoir été disposés dans le pneumatique (8) et gonflés jusqu'à un premier niveau de remplissage, leurs plus petites circonférences tournées vers l'axe du pneumatique entourent l'axe du pneumatique avec un rayon plus grand d'une valeur prédéterminée que le rayon intérieur des lignes de bord du pneumatique à la plus petite circonférence du pneumatique (8), les lignes de bord du pneumatique étant contiguës d'une jante (7) dans l'état monté.

5. Dispositif de maintien de la pression (1) selon l'une des revendications 1 à 4, **caractérisé en ce que** le dispositif de maintien de la pression (1) comprend un pneumatique (8) et une jante (7) et les boyaux (2) sont disposés dans ce pneumatique (8) et le pneumatique (8) avec les boyaux (2) est disposé sur cette jante (7), les conduites d'alimentation (3) étant raccordées au raccord d'alimentation commun (4), le raccord d'alimentation commun (4) étant disposé sur une ouverture traversante de la jante (7) et comprenant une ouverture d'alimentation (4a) ainsi qu'une zone de fermeture (15) pour chaque conduite d'alimentation (3).

6. Dispositif de maintien de la pression (1) selon la revendication 5, **caractérisé en ce que** le dispositif de maintien de la pression (1) comprend, pour chaque boyau (2, 2a), un dispositif de fermeture à pression différentielle qui peut fermer la communication à travers le raccord d'alimentation commun (4) avec un boyau (2, 2a) défectueux, chaque boyau (2, 2a) étant associé à un élément de fermeture (23) qui ferme la communication de l'ouverture d'alimentation (4a) dans le boyau (2, 2a) si un boyau (2, 2a) est défectueux, sous l'effet de la surpression dans au moins un boyau (2) intact.

7. Dispositif de maintien de la pression (1) selon la revendication 6, **caractérisé en ce que** les éléments de fermeture (23) du dispositif de fermeture à pression différentielle sont disposés lors de la mise en communication des boyaux (2, 2a) avec leurs conduites d'alimentation (3), chaque élément de fermeture (23) étant maintenu ouvert par un dispositif d'ouverture avec une force d'ouverture prédéterminée, avec au moins deux boyaux (2) disposés dans un pneumatique (4) et initialement remplis de gaz sous pression et, après l'apparition d'une fuite dans un boyau (2, 2a), l'au moins un boyau (2) intact restant rempli de gaz sous pression aplatit le boyau (2) qui présente la fuite et déplace ainsi l'élément de fermeture (23) de celui-ci dans une position de fermeture contre la force d'ouverture, de sorte que, lorsque du gaz sous pression est ajouté via le raccord d'alimentation commun (4), le gaz sous pression amené ne peut pas s'échapper à travers le boyau (2, 2a) qui fuit mais remplit l'au moins un autre boyau (2, 2a).

8. Dispositif de maintien de la pression (1) selon l'une des revendications 1 à 7, **caractérisé en ce que** l'installation de mise en communication (5, 6) comprend au moins un moyen de mise en communication qui est disposé sur au moins un boyau (2, 2a) et comprend des éléments de liaison (6) disposés sur au moins un côté de l'au moins un boyau (2, 2a) et répartis de façon sensiblement régulière sur la circonférence dans le sens de la circonférence de l'au moins un boyau (2, 2a), ces éléments de liaison (6) étant formés de préférence par des liaisons autoagrippantes ou éventuellement par des plages d'adhésif réalisant un assemblage qui peut être défait.

9. Dispositif de maintien de la pression (1) selon la revendication 8, **caractérisé en ce que** chaque boyau (2, 2a) comprend, dans la direction de l'axe du pneumatique, des premiers éléments autoagrippants sur un côté et des deuxièmes éléments autoagrippants sur l'autre côté, les premiers et deuxièmes éléments autoagrippants pouvant être reliés les uns aux autres.

10. Dispositif de maintien de la pression (1) selon l'une des revendications 1 à 9, **caractérisé en ce que** chaque boyau (2) est associé à sa propre réserve de pression (10) et les communications du raccord d'alimentation commun (4) aux boyaux (2) passent en parallèle par les conduites d'alimentation (11), les réserves de pression (10) associées et des conduites de remplissage (12) qui leur font suite, des soupapes de détente étant disposées entre les réserves de pression (10) et les boyaux (2) pour garantir que chaque boyau (2) sera alimenté jusqu'à ce qu'il atteigne une valeur de pression prédéterminée (8) et que l'alimentation reprenne si la pression dans le pneumatique (8) passe en dessous de la valeur prédéterminée, une soupape antiretour étant de préférence prévue entre chaque soupape de détente et le boyau (2) qui lui fait suite pour empêcher le reflux de gaz hors du boyau (2) vers la réserve de pression (10), et au moins une soupape de purge (14) étant en particulier raccordée aux boyaux (2) pour purger l'air des boyaux (2).

11. Dispositif de maintien de la pression (1) selon la revendication 10, **caractérisé en ce qu'**au moins quatre réserves de pression (10), de préférence au moins cinq, sont utilisées, les réserves de pression (10) étant des éléments de préférence circulaires autour de l'axe du pneumatique mente, qui font suite aux boyaux (2) correspondants dans le sens radial en direction de l'axe du pneumatique et qui sont de préférence reliés aux boyaux (2) ou les uns aux autres par une liaison pouvant être défaite.

12. Dispositif de maintien de la pression (1) selon la revendication 11, **caractérisé en ce que** les longueurs de périmètre des réserves de pression (10) sont adaptées à un pneumatique (8) correspondant de telle manière qu'après que les boyaux (2) et les réserves de pression (10) ont été disposés dans le pneumatique (8) et que les boyaux (2) ont été gonflés jusqu'à un premier niveau de remplissage, les plus petites circonférences, tournées vers l'axe du pneumatique, des réserves de pression (10) entourent l'axe du pneumatique sur un rayon plus grand d'une valeur prédéterminée que le rayon intérieur des lignes de bord du pneumatique à la plus petite circonférence du pneumatique (8), les lignes de bord du pneumatique étant contiguës de la jante (7) dans l'état monté.

13. Procédé pour maintenir une valeur de pression prédéterminée dans un dispositif de maintien de la pression (1) selon la revendication 5, **caractérisé en ce qu'**après une réduction de pression due à un boyau (2) défectueux, une source de gaz sous pression, de préférence une bouteille de gaz sous pression, est raccordée au raccord d'alimentation commun et un volume de gaz correspondant sensiblement à celui qui s'est échappé du boyau défectueux est introduit dans les boyaux (2) étanches jusqu'à ce qu'une pression prédéterminée soit atteinte dans le pneumatique (8), un dispositif de fermeture à pression différentielle étant utilisé avec chaque boyau (2) et le dispositif de fermeture à pression différentielle du boyau (2) défectueux fermant la communication via le raccord d'alimentation commun vers le boyau défectueux au moyen de la pression d'au moins un boyau intact.

14. Procédé selon la revendication 13, **caractérisé en ce que** le gaz provenant de la bouteille sous pression utilisé pour le remplissage est de l'azote.
